# EUROPÄISCHE PATENTSCHRIFT

(11) **EP 3 820 798 B1**
(45) Veröffentlichungstag und Bekanntmachung des Hinweises auf die Patenterteilung: **14.05.2025**
(21) Anmeldenummer: 19735563.9
(22) Anmeldetag: 03.07.2019
(51) Int. Cl.: B65G 54/02

(54) **TRANSPORTSYSTEM UND TRANSPORTVORRICHTUNG**
TRANSPORT SYSTEM AND TRANSPORT DEVICE
SYSTÈME DE TRANSPORT ET APPAREIL DE TRANSPORT

(30) Priorität: 13.07.2018 DE 102018116992
(43) Veröffentlichungstag der Anmeldung: 19.05.2021
(73) Patentinhaber: Beckhoff Automation GmbH, 33415 Verl (DE)
(72) Erfinder: NEUFELD, Jörg, 33104 Paderborn (DE); BORCHARDT, Uwe, 32602 Vlotho (DE)
(74) Vertreter: Patentanwaltskanzlei WILHELM & BECK
(86) Internationale Anmeldenummer: PCT/EP2019/067877
(87) Internationale Veröffentlichungsnummer: WO 2020/011624

(56) Entgegenhaltungen:
- EP-A1- 0 636 561
- WO-A1-00/64751
- WO-A1-2018/145214
- DE-A1- 102014 110 714
- DE-A1- 102016 106 621
- DE-A1- 3 702 248
- GB-A- 2 158 404

## Beschreibung

Die vorliegende Erfindung betrifft ein Transportsystem und eine Transportvorrichtung für ein Transportsystem.

Die deutsche Prioritätsanmeldung DE 10 2018 116 992.2 beschreibt ebenfalls ein Transportsystem und eine Transportvorrichtung für ein Transportsystem.

Transportvorrichtungen, die eine Mehrzahl an Rollen aufweisen und über die Rollen Kontakt zu einer gekrümmten Laufschiene eines Transportsystems haben, sind unter anderem bereits aus der EP 2 838 821 B1 bekannt. Die EP 2 838 821 B1 offenbart eine Transportvorrichtung, die mehrere symmetrisch aufgebaute bewegbare Schlitten aufweist, welche auf einer umlaufenden Laufschiene geführt werden. Jede symmetrische Schlittenhälfte umfasst dabei drei Rollen, die in einer Dreiecksanordnung angeordnet sind, wobei zwei Laufrollen auf einer ersten Lauffläche anliegen und eine dritte Laufrolle auf einer zweiten Lauffläche anliegt.

Damit die Rollen immer ausreichend Kontakt zu der Laufschiene haben, ist eine bestimmte Kraft erforderlich, die den Andruck der Rollen auf den Laufflächen der Laufschiene sicherstellt. Die Kraft für den Andruck der Rollen teilt sich gleichmäßig auf die beiden Laufflächen der Laufschiene auf. In einer dreieckförmigen Rollenanordnung wie in der EP 2 838 821 B1 muss die einzelne Rolle, die an der zweiten Lauffläche anliegt, die gleiche Kraft ertragen, wie die beiden Rollen, die an der ersten Lauffläche anliegen. Damit bildet die einzelne Rolle stets den Schwachpunkt der Anordnung und wird bei Überlast als erste geschädigt.

Um den Verschleiß zu reduzieren, kann die einzelne Rolle in der dreieckförmigen Rollenanordnung mit einem deutlich größeren Durchmesser als die Durchmesser der anderen beiden Rollen ausgestaltet werden. Ein vergrößerter Durchmesser stellt eine größere Angriffsfläche für die Kraft bereit und die einzelne Rolle kann auf diese Weise länger erhalten bleiben. Nachteilig an der Ausgestaltung ist jedoch, dass sich die Abmessungen der Transportvorrichtung aufgrund der ungleich großen Rollen-Durchmesser vergrößern.

Steht jedoch nicht genug Bauraum für die Ausgestaltung der Transportvorrichtung mit der einzelnen Rolle mit vergrößertem Durchmesser zur Verfügung, so können für eine verbesserte Kraftaufteilung jeweils zwei Rollen pro Lauffläche eingesetzt werden. Die Rollen können viereckig angeordnet und mit gleichen Rollen-Durchmessern ausgebildet sein. Unter idealen Bedingungen wird die Kraft für den Andruck der Rollen bei einer solchen Anordnung dann gleichmäßig auf jede Rolle aufgeteilt. Bei dem Übergang von einem geraden Abschnitt der Laufschiene zu einem gekrümmten Abschnitt tritt bei einer solchen Rollen-Anordnung das Problem auf, dass die erste kurveninnere Rolle den Kontakt zur Lauffläche der Laufschiene verliert und die Transportvorrichtung instabil auf den Laufflächen der Laufschiene liegt, da sie in diesem Bereich zu kippen beginnt. Dies geschieht unabhängig von der Kontur der Laufschiene beim Übergang eines geraden Abschnitts auf einen gekrümmten Laufschienenabschnitt aufgrund der Geometrie.

Ein Transportsystem sowie eine Transportvorrichtung mit den Merkmalen der Oberbegriffe sind aus Druckschrift DE 10 2014 100636 A1 bekannt. Weitere relevante Druckschriften für die kennzeichnenden Teile bilden die EP 0 636 561 A1, GB 2 158 404 A, DE 10 2014 110714 A1, WO 00/64751 A1 und WO 2018/145214 A1.

Die Aufgabe der vorliegenden Erfindung besteht darin, ein verbessertes Transportsystem sowie eine verbesserte Transportvorrichtung für ein Transportsystem mit einer robusten Anordnung von Rollen anzugeben, bei der der Verschleiß reduziert ist.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß wird ein Transportsystem mit einer gekrümmten Laufschiene, die auf einer Laufschienenseitenflanke eine erste und zweite Lauffläche aufweist, und zumindest eine Transportvorrichtung umfasst, vorgeschlagen. Die Transportvorrichtung wird in einer Laufrichtung entlang der Laufschiene geführt und weist zur Führung eine Mehrzahl an Rollen auf, die jeweils um eine eigene Drehachse drehbar gelagert sind. Eine erste und zweite Rolle der Transportvorrichtung bilden eine erste Rolleneinheit zum Abrollen auf der ersten Lauffläche. Eine dritte und vierte Rolle der Transportvorrichtung bilden eine zweite Rolleneinheit zum Abrollen auf der zweiten Lauffläche. Die erste und zweite Rolleneinheit sind über eine erste Trägereinrichtung verbunden, die ausgebildet ist, die erste Rolleneinheit gegen die erste Lauffläche und die zweite Rolleneinheit gegen die zweite Lauffläche vorzuspannen. Die erste Rolleneinheit und/oder die zweite Rolleneinheit weist eine Pendeleinheit auf. Die Pendeleinheit weist eine starre Verbindung der Drehachsen der ersten und zweiten Rollen der ersten Rolleneinheit und/oder eine starre Verbindung der Drehachsen der dritten und vierten Rollen der zweiten Rolleneinheit und eine Pendelachse auf, wobei die starre Verbindung schwenkbar um die Pendelachse gelagert ist. Die Pendelachse ist quer zu der Laufrichtung der ersten und zweiten Rollen der ersten Rolleneinheit und/oder der dritten und vierten Rollen der zweiten Rolleneinheit, die die Pendeleinheit aufweist, angeordnet.

Mithilfe der Pendelachse wird die Kraft, die zum Andrücken der Rollen der Transportvorrichtung auf die Laufflächen der Laufschiene erforderlich ist, gleichmäßig auf beide Rollen der Rolleneinheit, die die Pendeleinheit aufweist, verteilt.

Auf diese Weise ist es möglich, einen gleichbleibenden Verschleiß der beiden Rollen zu erzielen. Die Rollen haben überdies durch die schwenkbare Lagerung mithilfe der Pendelachse stets einen Bodenkontakt zu den Laufflächen der Laufschiene. Die Rollen der Rolleneinheit, die die Pendeleinheit aufweist, verhalten sich weiterhin mithilfe der Pendelachse wie eine einzelne Rolle. Auf diese Weise kann eine zuverlässige Führung der Transportvorrichtung entlang der Laufschiene auch bei einer hohen Dynamik und im Bereich einer gekrümmten Laufschiene gewährleistet werden.

In diesem Zusammenhang ist es möglich, dass die erste Rolleneinheit die Pendeleinheit mit der Pendelachse aufweist. Darüber hinaus ist auch denkbar, dass die zweite Rolleinheit die Pendeleinheit mit der Pendelachse umfasst. Auch können die erste Rolleneinheit und die zweite Rolleneinheit jeweils eine Pendeleinheit und jeweils eine Pendelachse umfassen.

Gemäß einer Ausführungsform weist die Laufschiene des Transportsystems entlang der Laufrichtung eine zweite Laufschienenseitenflanke auf. Die Transportvorrichtung umfasst überdies eine dritte Rolleneinheit und eine vierte Rolleneinheit, die an der zweiten Laufschienenseitenflanke abrollen. Zur Verbindung der dritten Rolleneinheit und der vierten Rolleneinheit dient eine zweite Trägereinrichtung.

Eine fünfte und sechste Rolle der Transportvorrichtung können die dritte Rolleneinheit bilden. Eine siebte und achte Rolle der Transportvorrichtung können die vierte Rolleneinheit bilden. Die dritte und vierte Rolleneinheit sind über die zweite Trägereinrichtung verbunden, die ausgebildet ist, die dritte Rolleneinheit gegen eine dritte Lauffläche und die vierte Rolleneinheit gegen eine vierte Lauffläche der zweiten Laufschienenseitenflanke vorzuspannen. Die Transportvorrichtung ist durch die Ausgestaltung mit weiteren Rollen auf der zweiten Laufschienenseitenflanke stabiler auf der Laufschiene sitzend umsetzbar. Dies erleichtert zudem die Führbarkeit der Transportvorrichtung auf der Laufschiene des Transportsystems.

In einer weiteren Ausführungsform ist die Laufschiene des Transportsystems entlang der Laufrichtung symmetrisch ausgebildet und die zweite Laufschienenseitenflanke umfasst eine dritte Lauffläche und eine vierte Lauffläche. Die Transportvorrichtung ist ferner symmetrisch zur Laufschiene ausgebildet, wobei die dritte Rolleneinheit auf der dritten Lauffläche und die vierte Rolleneinheit auf der vierten Lauffläche abrollen. Die dritte und vierte Rolleneinheit sind gleich zur ersten und zweiten Rolleneinheit ausgebildet. Sämtliche in Bezug auf die erste Rolleneinheit und/oder die zweite Rolleneinheit bereits beschriebenen und im Folgenden beschriebenen Merkmale und funktionalen Anordnungen sind somit übertragbar auf die dritte Rolleneinheit und/oder die vierte Rolleneinheit, ohne dass es einer gesonderten Beschreibung bedarf. Weiterhin kann die zweite Trägereinrichtung gleich zur ersten Trägereinrichtung ausgebildet sein.

Die dritte Rolleneinheit kann eine Pendeleinheit aufweisen, die die Drehachsen der fünften und sechsten Rollen der dritten Rolleneinheit starr verbindet. Weiterhin kann die Pendeleinheit der dritten Rolleneinheit eine Pendelachse umfassen, die die starre Verbindung der Drehachsen der fünften und sechsten Rollen schwenkbar lagert. Auch kann die Pendelachse quer zu der Laufrichtung der fünften und sechsten Rollen der dritten Rolleneinheit orientiert sein. Gleichermaßen kann die erste Rolleneinheit mit der ersten und zweiten Rolle auf der ersten Laufschienenseitenflanke eine gleich ausgebildete Pendeleinheit aufweisen. Statt der dritten Rolleneinheit kann die vierte Rolleneinheit mit der siebten und achten Rolle eine oben beschriebene Pendeleinheit aufweisen, die die Drehachsen der siebten und achten Rolle starr miteinander verbindet und eine Pendelachse umfasst. Gleichermaßen können die dritte und vierte Rolleinheit jeweils eine Pendeleinheit aufweisen, wie auch die erste und zweite Rolleneinheit jeweils eine Pendeleinheit aufweisen können. Eine symmetrische Ausgestaltung der Laufschiene des Transportsystems und der Transportvorrichtung erleichtert die Konstruktion und gewährleistet eine optimierte Kraftverteilung auf die einzelnen Rolleneinheiten. Zudem kann durch die symmetrische Ausgestaltung der Transportvorrichtung ein verbesserter Bodenkontakt der Rolleneinheiten bei gekrümmten Laufschienen bereitgestellt werden.

In einer weiteren Ausführungsform weist die Transportvorrichtung ein Koppelelement auf, das bügelförmig ausgebildet ist. Das Koppelelement ist ausgelegt, die erste Trägereinrichtung und die zweite Trägereinrichtung miteinander zu verbinden. Mithilfe der Anordnung kann die Vorspannung der Rollen der ersten und zweiten Rolleneinheit gegen die erste und zweite Lauffläche, sowie die Vorspannung der Rollen der dritten und vierten Rolleneinheit gegen die dritte und vierte Lauffläche der Laufschiene einfach umgesetzt werden.

Die Vorspannung der Rollen kann durch eine sogenannte "Überpressung" erreicht werden, das heißt die Rollen der Rolleneinheiten können konstruktiv weiter voneinander beabstandet sein, als die vorgesehene Distanz der Laufflächen, also die Breite der Laufschiene. Die Rollen der Rolleneinheiten werden auf diese Weise an die Laufflächen der Laufschiene gedrückt. Die Kraft, mit der die Rollen der Rolleneinheiten gegen die Laufflächen gedrückt werden, teilt sich gleichmäßig auf die Laufflächen der Laufschiene und der pro Lauffläche anliegenden Anzahl an Rollen auf.

Nach einer weiteren Ausführungsform ist die Pendeleinheit symmetrisch aufgebaut. Die Pendelachse liegt auf einer Symmetrieachse der Pendeleinheit und ist fest mit der ersten Trägereinrichtung und/oder der zweiten Trägereinrichtung der Transportvorrichtung verbunden. Der symmetrische Aufbau der Pendeleinheit erlaubt eine vereinfachte Konstruktion der Transportvorrichtung. Zudem können durch die symmetrische Ausgestaltung der Pendeleinheit Kosten für die Herstellung gespart werden und die Kraft kann gleichmäßig auf die einzelnen Rollen, insbesondere auf die beiden Rollen der Pendeleinheit, aufgeteilt werden.

In einer weiteren Ausführungsform weist die Pendeleinheit Lagerelemente auf. Die starre Verbindung der Pendeleinheit ist als ein U-förmiges Verbindungselement ausgebildet. Die ersten und zweiten Rollen der ersten Rolleneinheit und/oder die dritten und vierten Rollen der zweiten Rolleneinheit sind dabei auf Enden des U-förmigen Verbindungselements der Pendeleinheit aufgesetzt und mit einem ersten und zweiten Befestigungselement befestigt. Dadurch bildet die Anordnung einen U-förmigen Körper aus. Die Lagerelemente lagern den U-förmigen Körper überdies schwenkbar um die Pendelachse. Die Lagerelemente schützen die Pendelachse, die beispielsweise als Bolzen ausgebildet sein kann, bei der Bewegung des U-förmigen Körpers um die Pendelachse vor Beschädigung. Zusätzliche Lagerelemente können beispielsweise in den Rollen der ersten bis vierten Rolleneinheit vorgesehen sein, um den Reibungswiderstand bei der Bewegung der Rollen der Rolleneinheiten entlang der Laufflächen der Laufschiene zu reduzieren. Die Lagerelemente in den Rollen als auch für den U-förmigen Körper können beispielsweise als Rollenlager ausgebildet sein. Weiterhin denkbar ist der Einsatz von Gleitlagern. Alternativ wäre auch eine Ausgestaltung der Pendeleinheit ohne Lagerelemente für die Lagerung des U-förmigen Körpers möglich.

Gemäß einer weiteren Ausführungsform weist die erste Trägereinrichtung eine Ausnehmung auf, in der passgenau die Pendeleinheit sitzt. Die ersten und zweiten Rollen der ersten Rolleneinheit und/oder die dritten und vierten Rollen der zweiten Rolleinheit stehen über die Ausnehmung der ersten Trägereinrichtung vor, wenn die Pendeleinheit in der Ausnehmung angeordnet ist. Durch die platzsparende Bauweise kann die Transportvorrichtung insgesamt kompakt gehalten werden. Es ist daher möglich, die Transportvorrichtung einfach in bestehende Transportsysteme zu integrieren, die einen geringen Platzbedarf erfordern, ohne das Transportsystem dabei kompliziert umgestalten zu müssen. Weiterhin kann die zweite Trägereinrichtung eine gleich ausgebildete weitere Ausnehmung aufweisen, in der passgenau die zweite Pendeleinheit sitzt. Die weitere Ausnehmung kann aufgrund der symmetrischen Ausgestaltung der Transportvorrichtung symmetrisch zur Ausnehmung der ersten Trägereinrichtung ausgebildet sein.

Erfindungsgemäß grenzen die ersten und zweiten Rollen der ersten Rolleneinheit und/oder die dritten und vierten Rollen der zweiten Rolleneinheit, die die Pendeleinheit aufweist, aneinander an. Andernfalls, das heißt, ohne Ausbildung der ersten Rolleneinheit und/oder der zweiten Rolleneinheit ohne Pendeleinheit, sind die ersten und zweiten Rollen der ersten Rolleneinheit und/oder die dritten und vierten Rollen der zweiten Rolleneinheit beabstandet angeordnet. Eine Rollenanordnung in einer dreieckigen Form hat den Vorteil, dass kleinere Kurvenradien möglich sind.

In einer weiteren Ausführungsform sind die ersten und zweiten Rollen der ersten Rolleneinheit und/oder die dritten und vierten Rollen der zweiten Rolleneinheit mit den gleichen Rollen-Durchmessern ausgebildet. Dies vereinfacht die Konstruktion der Transportvorrichtung und spart Kosten und Aufwand für die Instandsetzung und Wartung. Beispielsweise können die erste bis vierte Rolle gleich groß ausgebildet und aus Kunststoff gefertigt sein und die Laufschiene mit Laufflächen aus Aluminium, was den Vorteil hat, dass kein Fetten des Systems erforderlich ist. Ein aus Stahl bestehendes System (bezogen auf die Rollen und die Laufschiene mit Laufflächen) muss im Vergleich dazu gefettet werden.

Erfindungsgemäß sind die erste und zweite Lauffläche der ersten Laufschienenseitenflanke der gekrümmten Laufschiene des Transportsystems unter einem Winkel zu einer Symmetrieachse der Laufschiene angeordnet. Die erste und zweite Lauffläche der ersten Laufschienenseitenflanke sind voneinander beabstandet und einander zugewandt. Ferner ist die erste Trägereinrichtung so ausgebildet, dass die ersten und zweiten Rollen der ersten Rolleneinheit und die dritten und vierten Rollen der zweiten Rolleneinheit zueinander orientiert und unter einem Winkel zu der Symmetrieachse der Laufschiene auf der ersten und zweiten Lauffläche auf der ersten Laufschienenseitenflanke angeordnet sind. Durch die nach innen liegenden Laufflächen kann die Transportvorrichtung kompakter ausgestaltet werden, da die Rollen der Rolleneinheiten ebenfalls nach innen liegend orientiert sind. Die Laufschiene kann im Querschnitt beispielsweise ein Doppel-T-Träger-Profil aufweisen. Darüber hinaus ist denkbar, die Transportvorrichtung für andere Laufschienenprofile einzusetzen. Charakteristisch bei einem linearen Transportsystem ist, dass die Transportvorrichtungen mit einer hohen Dynamik bewegt werden und die Rollen der Transportvorrichtung dadurch schnell abgerieben werden können. Die erfindungsgemäße Anordnung der Rollen der Transportvorrichtung kann daher vorteilhaft dazu beitragen, den Verschleiß zu reduzieren. Weiterhin ist die Transportvorrichtung flexibel mit verschiedenen Laufschienenkonturen des Transportsystems kombinierbar.

In einer weiteren Ausführungsform weist das Transportsystem eine Antriebsvorrichtung mit einer Mehrzahl an Spulen und Magneten auf. Die Antriebsvorrichtung ist zum Antrieb der wenigstens einen Transportvorrichtung ausgelegt. Die Spulen sind einzeln bestrombar und die Magneten sind an der wenigstens einen Transportvorrichtung angeordnet. Die Spulen erzeugen ein magnetisches Feld für die Wirkverbindung mit den Magneten, die an der wenigstens einen Transportvorrichtung angeordnet sind. Die wenigstens eine Transportvorrichtung wird durch die Wirkverbindung in Bewegung versetzt. Vorteilhaft an der Ausgestaltung des Transportsystems ist, dass keine Kabel für die Umsetzung erforderlich sind. Diese würden das Transportsystem unübersichtlich machen und zur eingeschränkten Beweglichkeit der Transportvorrichtung führen. Darüber hinaus erfordert das Transportsystem keine komplizierte Installation und Wartung, da keine Getriebe, Riemen oder Ketten für das Transportsystem eingesetzt werden.

Erfindungsgemäß wird des Weiteren eine Transportvorrichtung vorgeschlagen, die für die Verwendung in einem Transportsystem nach einem der vorstehenden Ansprüche geeignet ist.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 ein Transportsystem mit Transportvorrichtungen in einer Seitenansicht
Figur 2 eine perspektivische und gekippte Ansicht eines Ausschnitts X des in Figur 1 gezeigten Transportsystems mit Transportvorrichtungen;
Figur 3 eine schematische Darstellung einer Anordnung von Rollen der Transportvorrichtungen nach Figur 1;
Figur 4 eine vergrößerte und gedrehte perspektivische Ansicht einer Transportvorrichtung eines in Figur 2 markierten Bereichs A;
Figur 5 eine perspektivische Schnittansicht der Transportvorrichtung entlang einer Schnittebene S in Figur 4; und
Figur 6 eine vergrößerte perspektivische Darstellung einer in Figur 5 dargestellten Pendeleinheit.

Anhand der folgenden Figuren wird ein Ausführungsbeispiel eines Transportsystems mit zumindest einer Transportvorrichtung beschrieben. Beispielsweise kann sich das Transportsystem um ein lineares Transportsystem handeln, das in der Automatisierungstechnik eingesetzt wird. Neben einem Linearantrieb sind auch andere Antriebssysteme für das Transportsystem denkbar, wie z.B. ein Kettenförderer, ein Zahnriemenantrieb oder ein Antriebsystem, das ein Getriebe umfasst. Dabei ist die Verwendungsangabe des Transportsystems nicht einschränkend zu verstehen, da sich die Erfindung in allen Transportsystemen, in denen zumindest eine Transportvorrichtung vorgesehen ist, einsetzen lässt. Die nachfolgenden Figuren werden anhand eines linearen Transportsystems beschrieben.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

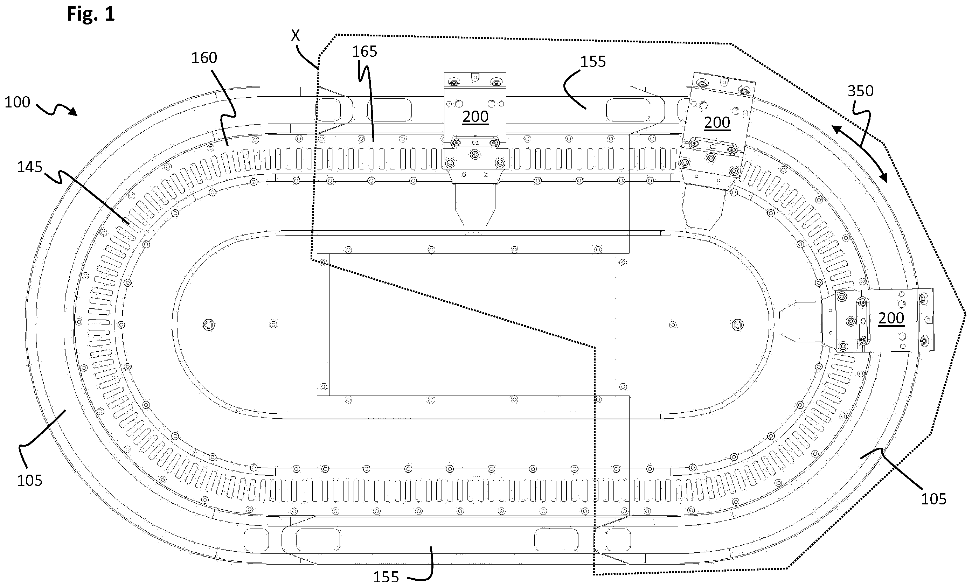

Figur 1 zeigt eine Seitenansicht eines Transportsystem 100, das beispielsweise drei Transportvorrichtungen 200 aufweist. Die Laufschiene des Transportsystems 100 kann als geschlossene Bahn ausgebildet sein, die zwei gekrümmte Laufschienenabschnitte 105, im Folgenden auch als gekrümmte Laufschiene 105 bezeichnet, und zwei gerade Laufschienenabschnitte 155, im Folgenden auch als gerade Laufschiene 155 bezeichnet, aufweist. Mittels der Laufschiene können die Transportvorrichtungen 200 entlang einer Laufrichtung 350 geführt werden. Darüber hinaus kann das Transportsystem 100 bogenförmige Motormodule 160 sowie gerade Motormodule 165 umfassen, wobei die Geometrie der Motormodule beliebig variiert und kombiniert werden kann, ebenso wie die Kontur der gekrümmten und/oder geraden Laufschiene 105, 155. Die Motormodule sind als Linearmotoren ausgebildet. Diese Linearmotoren weisen eine Mehrzahl an Statorzähnen 145 auf, wobei zumindest um einen Teil der Statorzähne 145 nicht dargestellte elektrische Spulen gewickelt, welche einzeln und getrennt voneinander bestrombar sind. Somit ist es mittels der Spulen möglich, ein magnetisches Wanderfeld zu erzeugen.

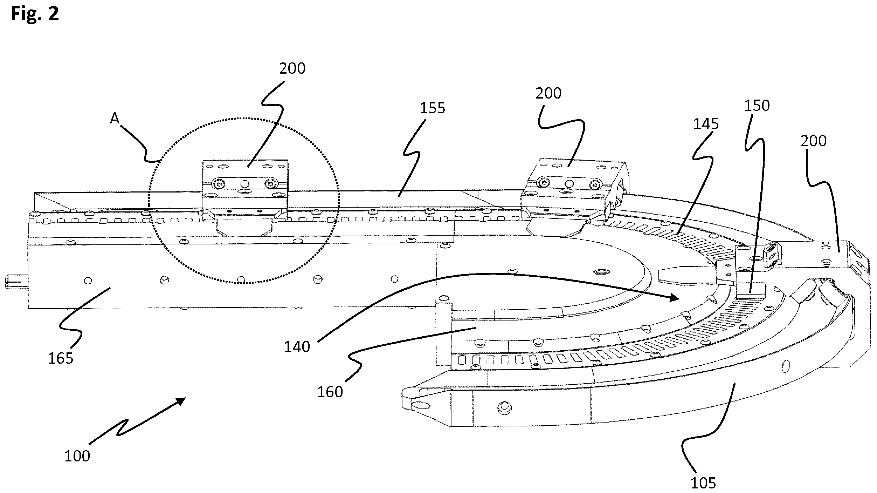

Figur 2 zeigt eine perspektivische und gekippte Ansicht eines Ausschnitts eines ersten markierten Bereichs X des in Figur 1 dargestellten erfindungsgemäßen Transportsystems 100. Das Transportsystem 100 weist eine gekrümmte Laufschiene 105 sowie eine gerade Laufschiene 155 auf. Des Weiteren umfasst das Transportsystem 100 wenigstens eine Transportvorrichtung 200, wobei in Figur 2 (sowie in Figur 1) exemplarisch drei Transportvorrichtungen 200 gezeigt sind. Die Anzahl der Transportvorrichtungen 200 ist beliebig gewählt und kann auch von der dargestellten Anzahl abweichen.

Weiterhin umfasst das Transportsystem 100 eine Antriebsvorrichtung 140, die ein bogenförmiges Motormodul 160 und ein gerades Motormodul 165 sowie eine Mehrzahl an Magneten 150 aufweist. Die an den Transportvorrichtungen 200 angeordneten Magneten 150 können in Verbindung mit dem zu Figur 1 beschriebenen, seitens der Spulen erzeugten magnetischen Wanderfeldes angetrieben werden, ohne dass es weiterer aktiver Antriebselemente auf den Transportvorrichtungen bedarf.

Der Stromfluss in den Spulen erzeugt das magnetische Wanderfeld für eine Wirkverbindung mit den Magneten 150 der Transportvorrichtungen 200. Eine Wirkverbindung beschreibt eine Wechselwirkung des magnetischen Wanderfeldes der Spulen mit den Magneten 150 der Transportvorrichtungen 200, wodurch die Transportvorrichtungen 200 entlang der gekrümmten 105 bzw. geraden 155 Laufschiene bewegt werden.

Die Transportvorrichtungen 200 des Transportsystems 100 in den Figuren 1 und 2 sind jeweils in einem Abstand zueinander angeordnet. Dieser Abstand kann je nach Ausgestaltung des Transportsystems 100 variieren. Die Transportvorrichtungen 200 des Transportsystems 100 können überdies einzeln bewegt, in einer Gruppe von mehreren Transportvorrichtungen 200 frei bewegt oder in einer Gruppe von mehreren Transportvorrichtungen 200 synchron bewegt werden. Damit sind die Transportvorrichtungen 200 des Transportsystems 100 flexibel für verschiedene Positionier- bzw. Transportaufgaben einsetzbar. Die Transportvorrichtungen 200 können auch als Schlitten, umfassend eine Plattform zum Transportieren eines Objekts, als Wagen, aufweisend eine Halterung zum Befestigen und Transportieren eines Objekts oder als Mover bezeichnet werden. Darüber hinaus sind weitere Ausgestaltungen der Transportvorrichtungen 200 denkbar.

Zusätzlich ist keine Verkabelung der Transportvorrichtungen 200 für das Transportsystem 100 vorgesehen. Eine fehlende Verkabelung wirkt sich vorteilhaft auf die freie Beweglichkeit der jeweiligen Transportvorrichtungen 200 in dem Transportsystem 100 aus. Gleichermaßen wird das Transportsystem 100 dadurch übersichtlicher und weniger verschleißanfällig ausgestaltet. Auch die Installation und Wartung des Transportsystems 100 kann durch die beschriebene Ausgestaltung vereinfacht werden, da keine Getriebe, Riemen oder Ketten im Transportsystem 100 eingesetzt werden.

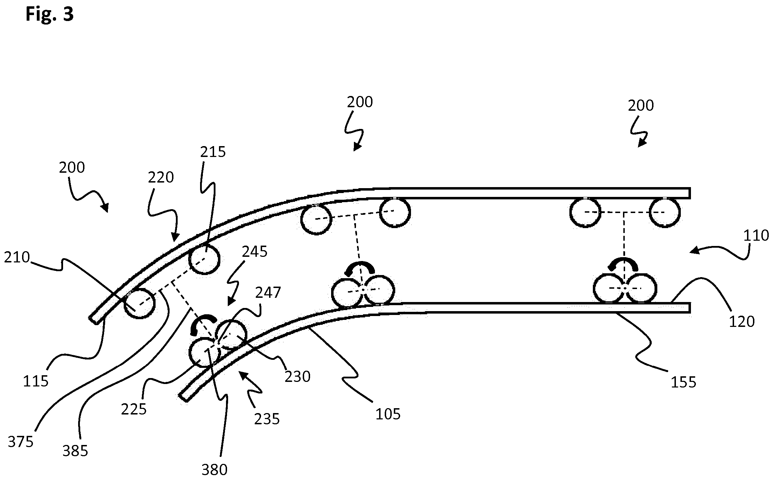

Die Transportvorrichtungen 200 weisen jeweils eine Mehrzahl an Rollen, zur Fortbewegung der Transportvorrichtung 200 entlang von Laufflächen der Laufschiene des Transportsystems 100, auf. Die schematische Anordnung der Rollen der Transportvorrichtungen 200 ist in Figur 3 gezeigt. Für die Darstellung in Figur 3 wurde ein Ausschnitt der Laufschiene, umfassend eine gerade Laufschiene 155 sowie eine gekrümmte Laufschiene 105 sowie die Rollen-Anordnung dreier Transportvorrichtungen 200 auf einer ersten Laufschienenseitenflanke 110 exemplarisch gewählt. Da die einzelnen Transportvorrichtungen 200 des in den Figuren 1 und 2 gezeigten Transportsystems 100 äquivalent aufgebaut und ausgestaltet sein können, wird zur Erläuterung der Figur 3 nur auf eine der erfindungsgemäßen Transportvorrichtungen 200 Bezug genommen.

In der schematischen Darstellung in Figur 3 sind eine erste und zweite Rolle 210, 215 einer ersten Rolleneinheit 220 beabstandet angeordnet und eine dritte und vierte Rolle 225, 230 einer zweiten Rolleneinheit 235 grenzen aneinander an und weisen eine erste Pendeleinheit 245 auf. Die erste Pendeleinheit 245 umfasst eine erste Pendelachse 247 und eine starre Verbindung von Drehachsen (nicht gezeigt) der dritten und vierten Rollen 225, 230 der zweiten Rolleneinheit 235. Die vorliegende Erfindung sieht vor, die erste Rolleneinheit 220 und/oder die zweite Rolleneinheit 235 der Transportvorrichtung 200 mit einer ersten Pendeleinheit 245 auszugestalten und dadurch die ersten und zweiten Rollen 210, 215 der ersten Rolleneinheit 220 und/oder die dritten und vierten Rollen 225, 230 der zweiten Rolleneinheit 235, die die erste Pendeleinheit 245 aufweist, gleichmäßig abnutzen zu können. Dies ist möglich bei einer symmetrischen Ausgestaltung der ersten Pendeleinheit 245 und der exemplarisch dargestellten dritten und vierten Rollen 225, 230 der zweiten Rolleneinheit 235, die die erste Pendeleinheit 245 aufweist und der ersten und zweiten Rollen 210, 215 der ersten Rolleneinheit 220.

Darüber hinaus können bei einer nicht dargestellten Ausführungsform die ersten und zweiten Rollen 210, 215 der ersten Rolleneinheit 220 die erste Pendeleinheit 245 aufweisen, und auf diese Weise die Drehachsen der ersten und zweiten Rollen 210, 215 starr verbunden sein (nicht gezeigt). Alternativ ist bei einer ebenfalls nicht dargestellten Ausführungsform ebenso denkbar, dass die ersten und zweiten Rollen 210, 215 der ersten Rolleneinheit 220 und die dritten und vierten Rollen 225, 230 der zweiten Rolleneinheit 235 jeweils eine Pendeleinheit 245 aufweisen und die Drehachsen der ersten und zweiten Rollen 210, 215 der ersten Rolleneinheit 220 bzw. die Drehachsen der dritten und vierten Rollen 225, 230 der zweiten Rolleneinheit 235 starr verbunden sind (nicht gezeigt).

Eine erste und zweite gestrichelte Linie 375, 380 zwischen den ersten und zweiten Rollen 210, 215 der ersten Rolleneinheit 220 und den dritten und vierten Rollen 225, 230 der zweiten Rolleneinheit 235 mit der ersten Pendeleinheit 245 verlaufen in der schematischen Darstellung parallel zueinander. Eine dritte gestrichelte Linie 385 verbindet die ersten und zweiten Linien 375, 380 und ist orthogonal zu der ersten und zweiten Linie 375, 380 orientiert. Die erste Pendelachse 247 ist dabei auf dem Schnittpunkt der zweiten und dritten Linie 380, 385 angeordnet und als schwarzer Punkt dargestellt. Der Pfeil oberhalb der ersten Pendelachse 247 soll dabei die schwenkbare Lagerung der dritten und vierten Rolle 225, 230 der zweiten Rolleneinheit 235 um die erste Pendelachse 247 veranschaulichen. Die Position der ersten Pendelachse 247 kann in einem weiteren, nicht dargestellten Ausführungsbeispiel variieren, wobei die Position der ersten Pendelachse 247 beispielsweise entlang der dritten Linie 385 nach oben, das heißt über die dritte und vierte Rolle 225, 230 hinauswandern kann. Dies kann gegebenenfalls dazu führen, dass die Konstruktion der Transportvorrichtung 200 und der gekrümmten und geraden Laufschiene 105, 155 ebenfalls mit angepasst werden müssen. Auch ist ein weiteres, ebenfalls nicht dargestelltes Ausführungsbeispiel wie oben beschrieben denkbar, in dem die erste Rolleneinheit 220 die erste Pendeleinheit 245 aufweist und die erste und zweite Rolle 210, 215 aneinander angrenzen und die dritte und vierte Rolle 225, 230 der zweiten Rolleneinheit 235 beabstandet angeordnet sind.

Damit die ersten bis vierten Rollen 210, 215, 225, 230 der ersten und zweiten Rolleneinheit 220, 235 an der ersten und zweiten Lauffläche 115, 120 der ersten Laufschienenseitenflanke 110 der gekrümmten und geraden Laufschiene 105, 155 anliegen und Kontakt haben, ist eine Kraft zum Anpressen der ersten bis vierten Rollen 210, 215, 225, 230 erforderlich. Die Kraft für den Andruck der ersten bis vierten Rollen 210, 215, 225, 230, also die Vorspannung der ersten bis vierten Rollen 210, 215, 225, 230 gegen die erste und zweite Lauffläche 115, 120, wird mithilfe einer sogenannten "Überpressung" verwirklicht. Zur Erreichung der Überpressung sind die ersten bis vierten Rollen 210, 215, 225, 230 der Transportvorrichtung 200 konstruktiv um einen Faktor weiter beabstandet, als es die Breite der gekrümmten und geraden Laufschiene 105, 155 mit der ersten und zweiten Lauffläche 115, 120 erlaubt. Die Überpressung wird demnach durch die bewusste Konstruktion vorstehender erster bis vierter Rollen 210, 215, 225, 230 erzielt und drückt die erste und zweite Rolle 210, 215 auf diese Weise gegen die erste Lauffläche 115 sowie die dritte und vierte Rolle 225, 230 gegen die zweite Lauffläche 120 der gekrümmten und geraden Laufschiene 105, 155.

Mithilfe der in der Erfindung vorgesehenen ersten Pendeleinheit 245 und der Überpressung der ersten bis vierten Rollen 210, 215, 225, 230 der ersten und zweiten Rolleneinheit 220, 235 kann gewährleistet werden, dass die dritten und vierten Rollen 225, 230 der zweiten Rolleneinheit 235, umfassend die erste Pendeleinheit 245, und/oder die erste und zweite Rolle 210, 215 der ersten Rolleneinheit 220, umfassend die erste Pendeleinheit 245, stets Kontakt zu der ersten und zweiten Lauffläche 115, 120 der gekrümmten und geraden Laufschiene 105, 155 haben.

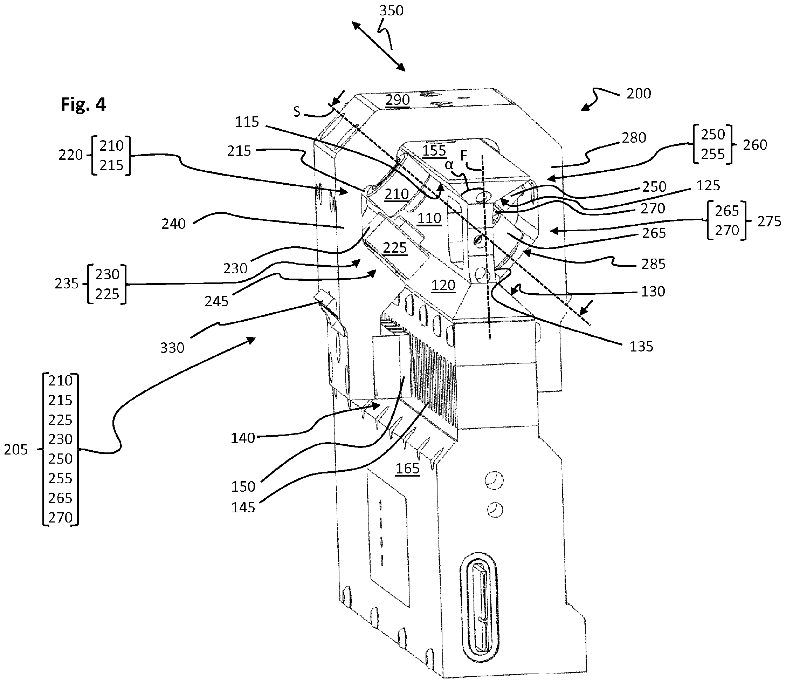

Figur 3 veranschaulicht das der Erfindung zugrundeliegende Prinzip der Anordnung der zweiten Rolleneinheit 235, die exemplarisch die erste Pendeleinheit 245 aufweist, sowie der ersten Rolleneinheit 220 der Transportvorrichtung 200 für die erste Laufschienenseitenflanke 110. Die nachfolgenden Figuren zeigen ein konkretes Ausführungsbeispiel der Erfindung mit einer geraden Laufschiene 155, die ein angenähertes Doppel-T-Träger-Profil im Querschnitt aufweist und dann neben der ersten Laufschienenseitenflanke 110 eine zweite Laufschienenseitenflanke 135 mit einer dritten Rolleneinheit 260 und einer vierten Rolleneinheit 275 aufweist, wie beispielsweise in Figur 4 dargestellt ist. Die Anordnung der ersten bis vierten Rollen 210, 215, 225, 230 der ersten und zweiten Rolleinheit 220, 235 auf der ersten Laufschienenseitenflanke 110 sowie einer fünften und sechsten Rolle 250, 255 der dritten Rolleneinheit 260 und einer siebten und achten Rolle 265, 270 der vierten Rolleneinheit 275 auf der zweiten Laufschienenseitenflanke 135 der Transportvorrichtung 200 ist dabei an die gerade Laufschiene 155 mit dem Doppel-T-Träger-Profil angepasst. Das oben erläuterte Prinzip der Rollenanordnung der ersten bis vierten Rollen 210, 215, 225, 230 sowie die Ausbildung der ersten und zweiten Rolleneinheit 220, 235 ist gleichermaßen auf die fünfte bis achte Rolle 250, 255, 265, 270 und die dritte und vierte Rolleneinheit 260, 275 übertragbar und wird an der Stelle nicht gesondert ausgeführt.

Figur 4 zeigt eine vergrößerte und gedrehte perspektivische Ansicht einer Transportvorrichtung 200 eines in Figur 2 markierten zweiten Bereichs A. Zur besseren Übersichtlichkeit wurde für die Darstellung der erfindungsgemäßen Transportvorrichtung 200 in den Figuren 4, 5 und 6 eine gerade Laufschiene 155 gewählt, entlang der sich die Transportvorrichtung 200 bewegt. Beispielsweise kann sich die Laufrichtung 350 der Transportvorrichtung 200 wie in den Figuren 4, 5 und 6 dargestellt erstrecken. Darüber hinaus sind auch andere Ausgestaltungen für die Laufrichtung 350 der Transportvorrichtung 200, insbesondere auch entlang einer gekrümmten Laufschiene 105 wie in den Figuren 1 und 2 dargestellt, denkbar. Die gerade Laufschiene 155 des Transportsystems 100 umfasst die erste Laufschienenseitenflanke 110 und die zweite Laufschienenseitenflanke 135. An der ersten Laufschienenseitenflanke 110 sind die erste und zweite Lauffläche 115, 120 ausgebildet. An der zweiten Laufschienenseitenflanke 135 sind die dritte und vierte Lauffläche 125, 130 ausgebildet. Die erste und zweite Lauffläche 115, 120 sind voneinander beabstandet und einander zugewandt angeordnet und die dritte und vierte Lauffläche 125, 130 sind voneinander beabstandet und einander zugewandt angeordnet.

Ferner weist die gerade Laufschiene 155 des Transportsystems 100 eine Symmetrieachse F, wie in Figur 4 dargestellt ist, auf. Die erste bis vierte Laufflächen 115, 120, 125, 130 sind jeweils unter einem Winkel α zu der Symmetrieachse F der geraden Laufschiene 155 angeordnet. Der Winkel α ist beispielhaft zur Illustration der Anordnung der ersten Lauffläche 115, an der die erste Rolleneinheit 220 anliegt, gegenüber der Symmetrieachse F der Laufschiene gezeigt, wobei für α in Gradmaß gilt: 0° < α < 90°. Beispielsweise kann α den Wert 45° annehmen. Die übrigen Winkel α für die Anordnung der zweiten Lauffläche 120 zur Symmetrieachse F sowie die Anordnung der dritten Lauffläche 125 zur Symmetrieachse F und der Anordnung der vierten Lauffläche 130 zur Symmetrieachse F sind der Übersichtlichkeit halber nicht in Figur 4 enthalten. Da die Laufschiene 155 insgesamt in Bezug auf die Laufrichtung 350 symmetrisch ausgestaltet ist, weisen die Anordnungen der zweiten bis vierten Laufflächen 120, 125, 130 jeweils die gleichen Winkel α zur Symmetrieachse F der Laufschiene auf.

Die in Figur 4 dargestellte gerade Laufschiene 155 des Transportsystems 100 weist im Querschnitt exemplarisch ein angenähertes Doppel-T-Träger-Profil auf. Die erfindungsgemäße Transportvorrichtung 200 mit der ersten bis vierten Rolleneinheit 220, 235, 260, 275 ist jedoch nicht auf das in Figur 4 gezeigte Laufschienen-Profil eingeschränkt, sondern kann für beliebige Laufschienen-Profile und Laufschienen-Konturen, wie beispielsweise S-Kurven, X-Profile, etc. eingesetzt werden. Vorteilhaft an der Ausgestaltung des Transportsystems 100 mit der geraden Laufschiene 155 mit Doppel-T-Träger-Profil, bei dem die erste bis vierte Laufflächen 115, 120, 125, 130 nach innen liegend und einander zugewandt orientiert sind, ist, dass die Transportvorrichtung 200 dadurch mit kompakten Abmessungen ausgestaltet werden kann. Die Abmessungen der Transportvorrichtung 200 können sich hingegen bei einer anderen Anordnung der ersten bis vierten Laufflächen 115, 120, 125, 130 der geraden Laufschiene 155, die beispielsweise durch ein anderes Laufschienen-Profil bedingt sein kann, vergrößern. Die Erfindung ist zudem nicht auf den Einsatz einer symmetrisch ausgebildeten geraden Laufschiene 155 beschränkt, sondern kann auch für asymmetrisch ausgebildete gerade Laufschienen 155 eingesetzt werden.

Die oben beschriebene Ausführungsform der geraden Laufschiene 155 sowie die nachfolgende Beschreibung der Ausbildung einer ersten Trägereinrichtung 240 und einer zweiten Trägereinrichtung 280 kann gleichermaßen für die Ausgestaltung der gekrümmten Laufschiene 105 als auch für die Ausgestaltung der geraden Laufschiene 155, die in den Figu-ren 1 und 2 gezeigt sind, gelten.

Die Transportvorrichtung 200 weist eine erste Trägereinrichtung 240, ein Koppelelement 290 sowie eine zweite Trägereinrichtung 280 auf. Das Koppelelement 290 der Transportvorrichtung 200 kann bügelförmig ausgebildet und dazu vorgesehen sein, die erste Trägereinrichtung 240 und die zweite Trägereinrichtung 280 miteinander zu verbinden. Die erste Trägereinrichtung 240 ist ausgelegt, die erste Rolleneinheit 220 gegen die erste Lauffläche 115 und die zweite Rolleneinheit 235 gegen die zweite Lauffläche 120 vorzuspannen, wobei die erste Rolleneinheit 220 die erste Rolle 210 und die zweite Rolle 215 (nicht gezeigt) und die zweite Rolleneinheit 235 die dritte Rolle 225 und die vierte Rolle 230 umfasst. Die zweite Trägereinrichtung 280 ist ausgebildet, die dritte Rolleneinheit 260 gegen die dritte Lauffläche 125 und die vierte Rolleneinheit 275 gegen die vierte Lauffläche 130 vorzuspannen, wobei die dritte Rolleneinheit 260 die fünfte Rolle 250 und die sechste Rolle 255 (nicht gezeigt) und die vierte Rolleneinheit 275 die siebte Rolle 265 und achte Rolle 270 umfasst. Die Mehrzahl an Rollen 205, also die ersten bis achten Rollen 210, 215, 225, 230, 250, 255, 265, 270 können mit den gleichen Rollen-Durchmessern ausgestaltet sein. Auch ist es bei vorhandenem Platz denkbar, die ersten bis achten Rollen 210, 215, 225, 230, 250, 255, 265, 270 mit unterschiedlichen Rollen-Durchmessern auszugestalten. Weiterhin können die ersten bis achten Rollen 210, 215, 225, 230, 250, 255, 265, 270 aus dem gleichen Material gefertigt sein, beispielsweise können die ersten bis achten Rollen 210, 215, 225, 230, 250, 255, 265, 270 aus Kunststoff gefertigt sein.

Die Vorspannung der ersten bis vierten Rolleneinheiten 220, 235, 260, 275 gegen die erste bis vierte Lauffläche 115, 120, 125, 130 wird mithilfe der oben beschriebenen Überpressung verwirklicht, indem die erste und zweite Rolleneinheit 220, 235 und die dritte und vierte Rolleneinheit 260, 275 konstruktiv weiter beabstandet ausgebildet sind, als die gerade Laufschiene 155 auf der ersten Laufschienenseitenflanke 110 und der zweiten Laufschienenseitenflanke 135 breit ist. Die Überpressung drückt die erste bis vierte Rolleneinheit 220, 235, 260, 275 gegen die erste bis vierte Lauffläche 115, 120, 125, 130 der geraden Laufschiene 155 und sorgt auf diese Weise für einen Kontakt der ersten bis achten Rollen 210, 215, 225, 230, 250, 255, 265, 270 der ersten bis vierten Rolleneinheit 220, 235, 260, 275 mit der ersten bis vierten Lauffläche 115, 120, 125, 130.

Dies ist möglich, da die erste und zweite Rolleneinheit 220, 235 mit der ersten Trägereinrichtung 240 verbunden sind. Weiterhin sind die dritte und vierte Rolleneinheit 260, 275 mit der zweiten Trägereinrichtung 280 verbunden, und die erste und zweite Trägereinrichtung 240, 280 werden über das bügelförmige Koppelelement 290 zusammengefügt. Die erste Trägereinrichtung 240, die zweite Trägereinrichtung 280 und das Koppelelement 290 können beispielsweise aus Aluminium gefertigt sein, es sind jedoch auch andere Materialien denkbar. Bei einer Verwendung von Aluminium können sich die erste Trägereinrichtung 240, die zweite Trägereinrichtung 280 und das Koppelelement 290 der Transportvorrichtung 200 elastisch verformen und die Transportvorrichtung 200 dadurch federnd auf der geraden Laufschiene 155 des Transportsystems 100 lagern. Dabei können die federnde Lagerung und die Vorspannung der Transportvorrichtung 200 ohne den Einsatz zusätzlicher Bauteile, wie beispielsweise Federn erreicht werden, sondern nur mithilfe einer gezielten Ausnutzung der Materialeigenschaft und der Konstruktion der Transportvorrichtung 200 bereitgestellt werden.

Der Linearmotor, der zum Antrieb der Transportvorrichtung 200 eingesetzt wird und das in Figur 4 gezeigte gerade Motormodul 165 umfasst, regelt darüber hinaus die Position der Transportvorrichtung 200 auf der geraden Laufschiene 155 des Transportsystems 100. Mithilfe der Transportvorrichtung 200 soll eine gewünschte Position auf der geraden Laufschiene 155 des Transportsystems 100 mit hoher Dynamik angefahren werden können und zugleich eine gute Fahrdynamik, also eine gute Bodenhaftung der ersten bis vierten Rolleneinheit 220, 235, 260, 275 der Transportvorrichtung 200, auch für den Einsatz einer gekrümmten Laufschiene 105, wie in den Figuren 1 bis 3 dargestellt, gewährleistet werden. Dabei ist die Qualität der Positionsregelung des Linearmotors umso besser, je härter die Transportvorrichtung 200 auf der Laufschiene gefedert ist, also je höher die Vorspannung der ersten bis vierten Rolleneinheit 220, 235, 260, 275 gegen die erste bis vierte Lauffläche 115, 120, 125, 130 ausgebildet ist.

Die erste Trägereinrichtung 240 ist so ausgebildet, dass die erste bis vierte Rolle 210, 215, 225, 230 der ersten und zweiten Rolleneinheit 220, 235 zueinander orientiert sind, und eine V-förmige Anordnung bilden. Die erste und zweite Rolleneinheit 220, 235 sind jeweils unter dem Winkel α zu der Symmetrieachse F der geraden Laufschiene 155 angeordnet. Die erste und zweite Rolleneinheit 220, 235 liegen an der ersten und zweiten Lauffläche 115, 120 an und rollen über ihre Drehachsen, die in Figur 4 nicht gezeigt sind, entlang der Laufrichtung 350 auf der ersten und zweiten Laufflächen 115, 120 ab.

Die zweite Trägereinrichtung 280 ist ferner so ausgelegt, dass die fünfte bis achte Rolle 250, 255, 265, 270 der dritten und vierten Rolleneinheit 260, 275 zueinander orientiert sind, und eine V-förmige Anordnung bilden. Die dritte und vierte Rolleneinheit 260, 275 sind jeweils unter dem Winkel α zu der Symmetrieachse F der Laufschiene 155 angeordnet. Die dritte und vierte Rolleneinheit 260, 275 liegen an der dritten und vierten Lauffläche 125, 130 an und rollen über ihre Drehachsen, die in Figur 4 nicht gezeigt sind, entlang der Laufrichtung 350 auf der dritten und vierten Lauffläche 125, 130 ab.

Demnach sind die erste bis vierte Rolleneinheit 220, 235, 260, 275 symmetrisch zu der Symmetrieachse F der geraden Laufschiene 155 auf der ersten bis vierten Lauffläche 115, 120, 125, 130 angeordnet, und die Transportvorrichtung 200 weist damit eine symmetrische Ausgestaltung auf, die auf die gerade Laufschiene 155 des Transportsystems abgestimmt ist.

Die in Figur 4 gezeigte Transportvorrichtung 200 weist unterhalb der geraden Laufschiene 155 die Antriebsvorrichtung 140 auf. Die Magneten 150 der Antriebsvorrichtung 140 sind dabei an den dem geraden Motormodul 165 zugewandten Innenseiten der Transportvorrichtung 200 angebracht, wobei aufgrund der perspektivischen Ansicht von Figur 4 nur die Magneten 150 sichtbar sind, die an der ersten Trägereinrichtung 240 angeordnet sind. An der zweiten Trägereinrichtung 280 sind in analoger Weise weiteren Magneten 150 angeordnet. Die Statorzähne 145 der Antriebsvorrichtung 140, die zumindest teilweise mit nicht dargestellten Spulen umwickelt sind, befinden sich gegenüberliegend der Anordnung der Magneten 150. Aufgrund der symmetrischen Ausbildung der Transportvorrichtung 200 befinden sich die Statorzähne 145 mit den Spulen der Antriebsvorrichtung 140 zwischen den Magneten 150 die an der ersten Trägereinrichtung 240 angeordnet sind und den Magneten 150 die an der zweiten Trägereinrichtung 280 angeordnet sind.

Die zweite Rolleneinheit 235 weist die erste Pendeleinheit 245 auf, wobei die erste Pendeleinheit 245 über die dritte und vierte Rolle 225, 230 auf der zweiten Lauffläche 120 auf der Laufschienenseitenflanke 110 der geraden Laufschiene 155 anliegt. Die erste Pendeleinheit 245 weist die erste Pendelachse 247 auf (nicht dargestellt) sowie die starre Verbindung der Drehachsen R (nicht gezeigt) der dritten und vierten Rollen 225, 230. Die zweite Rolleneinheit 235 ist durch die Ausbildung der ersten Pendeleinheit 245 schwenkbar um die erste Pendelachse 247 (nicht dargestellt) gelagert.

Die vierte Rolleneinheit 275 weist eine zweite Pendeleinheit 285 auf, die im Wesentlichen der ersten Pendeleinheit 245 entspricht. Die zweite Pendeleinheit 285 liegt über die siebte und achte Rolle 265, 270 auf der vierten Lauffläche 130 auf der weiteren Laufschienenseitenflanke 135 der geraden Laufschiene 155 an. Die zweite Pendeleinheit 285 weist die zweite Pendelachse 295 auf (nicht dargestellt) sowie die starre Verbindung der Drehachsen R (nicht gezeigt) der siebten und achten Rollen 265, 270. Die vierte Rolleneinheit 275 ist durch die Ausbildung der zweiten Pendeleinheit 285 schwenkbar um die zweite Pendelachse 295 (nicht dargestellt) gelagert.

Die in Figur 4 dargestellte erste Pendeleinheit 245 umfasst die erste Pendelachse 247, welche fest mit einer Abdeckung 330 mit der ersten Trägereinrichtung 240 verbunden ist. Weiterhin ist auch eine lose Lagerung der ersten Pendelachse 247 (nicht gezeigt) denkbar. Analog umfasst die zweite Pendeleinheit 285 die zweite Pendelachse 295, welche fest mit einer nicht dargestellten Abdeckung 330 mit der zweiten Trägereinrichtung 280 verbunden ist. Auch hier ist in einer nicht dargestellten alternativen Ausführungsform eine lose Lagerung der zweiten Pendelachse 295 (nicht gezeigt) denkbar.

Ebenfalls denkbar ist eine nicht dargestellte Ausgestaltung der Transportvorrichtung 200, in der die erste und/oder die dritte Rolleneinheit 220, 260 eine Pendeleinheit mit einer starren Verbindung der Drehachsen R der ersten und zweiten Rollen 210, 215 bzw. fünften und sechsten Rollen 250, 255 sowie eine Pendelachse aufweist (nicht dargestellt). Zudem können die erste und die dritte Rolleneinheit 220, 260 jeweils eine Pendeleinheit mit den genannten Merkmalen umfassen (nicht dargestellt).

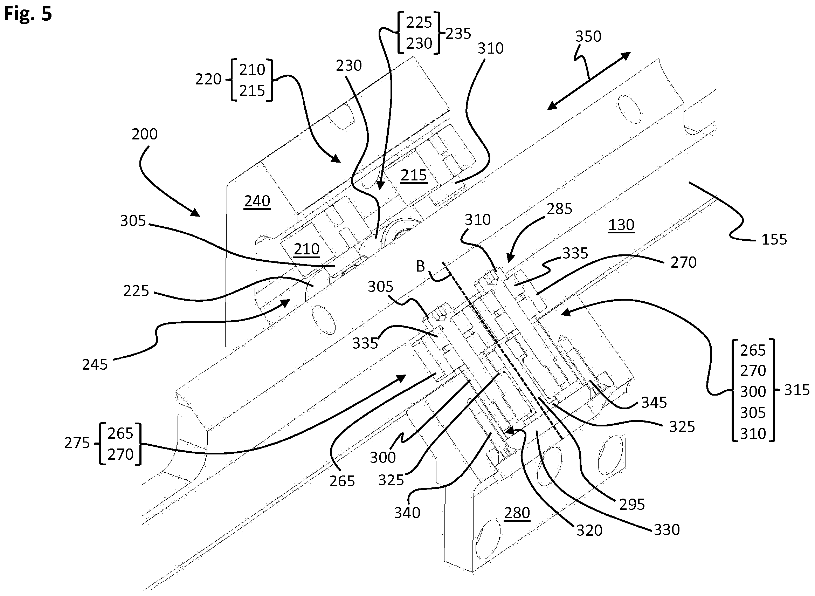

Figur 5 zeigt eine perspektivische Schnittansicht der Transportvorrichtung 200 entlang einer Schnittebene S in Figur 4. Figur 5 zeigt analog zu Figur 4 die erste und zweite Rolle 210, 215 der ersten Rolleneinheit 220 und die dritte und vierte Rolle 225, 230 der zweiten Rolleneinheit 235, wobei die zweite Rolleneinheit 235 die Pendeleinheit 245 aufweist. Auch in Figur 5 ist es entsprechend einer nicht dargestellten Ausführungsform denkbar, die erste Rolleneinheit 220 mit einer ersten Pendeleinheit 245 auszugestalten bzw. die erste und zweite Rolleneinheit 220, 235 zugleich jeweils mit Pendeleinheiten auszugestalten.

Die erste Rolle 210 ist mithilfe eines ersten Befestigungselements 305 mit der ersten Trägereinrichtung 240 verbunden, und die zweite Rolle 215 ist mithilfe eines zweiten Befestigungselements 310 mit der ersten Trägereinrichtung 240 verbunden. Das erste und das zweite Befestigungselement 305, 310 können beispielsweise als Schrauben ausgebildet sein. Darüber hinaus sind ebenso andere Befestigungsmittel möglich, beispielsweise Stifte, auf die die Rollen aufgeklebt werden, Bolzen, etc., die ausgebildet sind, die erste und zweite Rolle 210, 215 der ersten Rolleneinheit 220 mit der ersten Trägereinrichtung 240 zu verbinden und dadurch eine Vorspannung der ersten und zweiten Rollen 210, 215 gegen die erste Lauffläche (nicht dargestellt) der ersten Laufschienenseitenflanke der geraden Laufschiene 155 zu ermöglichen. Auch die zweite Rolleneinheit 235 mit der ersten Pendeleinheit 245 ist mit der ersten Trägereinrichtung 240 verbunden. Dies ist in der dargestellten Ansicht der Transportvorrichtung 200 jedoch nicht gezeigt.

In Figur 5 ist ersichtlich, dass die ersten und zweiten Rollen 210, 215 der ersten Rolleneinheit 220 beabstandet zueinander angeordnet sind und die dritten und vierten Rollen 225, 230 der zweiten Rolleneinheit 235, die die erste Pendeleinheit 245 mit der ersten Pendelachse 247 (nicht dargestellt) aufweist, aneinander angrenzen. Mithilfe dieser Ausgestaltung ist eine vereinfachte Konstruktion einer dreieckförmigen Rollen-Anordnung möglich. Dabei umfasst die dreieckförmige Rollen-Anordnung zwei Rollen, die an der ersten Lauffläche anliegen und abrollen und zwei Rollen, die an der zweiten Lauffläche anliegen und abrollen, wobei die Rollen, die an der zweiten Lauffläche anliegen und abrollen, aneinander angrenzen und mittig zu dem Abstand der beiden Rollen, die an der ersten Lauffläche anliegen und abrollen, angeordnet sind. Für das Ausführungsbeispiel in Figur 5 ist also die zweite Rolleneinheit 235 mit der ersten Pendeleinheit 245 mittig zu dem Abstand den die beiden Rollen der ersten Rolleneinheit 220 aufweisen, angeordnet. Dadurch entsteht eine verkippte, dreieckförmige Anordnung der ersten bis vierten Rollen 210, 215, 225, 230 auf der ersten Laufschienenseitenflanke, wobei die verkippte Anordnung durch die Neigung bzw. Anordnung der Laufflächen in Bezug auf die Symmetrieachse der geraden Laufschiene 155 zustande kommt.

Für eine optimale Kraftaufteilung auf die ersten bis vierten Rollen 210, 215, 225, 230 der ersten und zweiten Rolleneinheit 220, 235 ist die dreieckförmige Anordnung der ersten bis vierten Rollen 210, 215, 225, 230 der Transportvorrichtung 200 symmetrisch ausgebildet. Eine symmetrische Dreiecks-Anordnung der ersten bis vierten Rollen 210, 215, 225, 230 kann dazu beitragen, dass die Transportvorrichtung 200, bezogen auf ihre Abmessungen in Richtung der geraden Laufschiene 155, kompakt ausgestaltet werden kann. Ebenfalls denkbar ist es die dritten und vierten Rollen 225, 230 der zweiten Rolleneinheit 235, die die erste Pendeleinheit 245 aufweist, weiter voneinander zu beabstanden. Um die symmetrische dreieckförmige Rollenanordnung der Transportvorrichtung 200 dann weiter gewährleisten zu können, müssen die ersten und zweiten Rollen 210, 215 der ersten Rolleneinheit 220 ebenfalls weiter voneinander beabstandet angeordnet werden. Dies hat dann zur Folge, dass sich die Abmessungen der Transportvorrichtung 200 entlang der geraden Laufschiene 155 vergrößern.

Darüber hinaus können bei einer nicht dargestellten Ausführungsform die ersten bis vierten Rollen 210, 215, 225, 230 der Transportvorrichtung 200 auch in einer asymmetrischen Dreiecksform angeordnet sein, das heißt, die beiden Rollen der zweiten Rolleneinheit 235 mit der ersten Pendeleinheit 245 und der ersten Pendelachse 247 (nicht dargestellt) befinden sich dann in unterschiedlicher Distanz zu der ersten Pendelachse 247 (nicht dargestellt). In einer solchen Ausgestaltung ist es jedoch aufgrund des Hebelgesetzes möglich - bei Betrachtung der ersten Pendeleinheit 245 mit der dritten und vierten Rolle 225, 230 als einen zweiseitigen Hebel, der um die erste Pendelachse 247 (Drehachse) schwenkbar gelagert ist - dass auf die Rolle, die sich in geringerer Distanz zur ersten Pendelachse 247 befindet, mehr Kraft übertragen wird, als auf die Rolle mit einem längeren Hebelarm, also einer größeren Distanz zur ersten Pendelachse 247 (die erste Pendelachse 247 ist in Figur 5 nicht dargestellt). Dies kann den Verschleiß der stärker beanspruchten Rolle fördern, da diese durch die Kraftübertragung schneller abgenutzt wird.

Die siebte und achte Rolle 265, 270 der Transportvorrichtung 200 bilden die vierte Rolleneinheit 275 aus. Die vierte Rolleneinheit 275 rollt an der vierten Lauffläche 130 der geraden Laufschiene 155 ab und weist eine zweite Pendeleinheit 285 auf. Die zweite Pendeleinheit 285 ist analog zur ersten Pendeleinheit 245 aufgebaut und umfasst eine Symmetrieachse B. Auf der Symmetrieachse B liegt eine zweite Pendelachse 295 der zweiten Pendeleinheit 285. Die zweite Pendelachse 295 ist quer zur Laufrichtung 350 der siebten und achten Rolle 265, 207 der vierten Rolleneinheit 275, die die zweite Pendeleinheit 285 umfasst, orientiert und im dargestellten Ausführungsbeispiel als Bolzen verwirklicht. Es sind jedoch auch andere Ausgestaltungen der zweiten Pendelachse 295 denkbar wie z.B. ein Stift. Die zweite Pendelachse 295 ist mit einer Abdeckung 330 fest mit der zweiten Trägereinrichtung 280 verbunden, wobei die Abdeckung 330 von einem dritten und vierten Befestigungselement 340, 345 fixiert wird. Alternativ ist auch eine lose zweite Pendelachse 295 denkbar. Das dritte und vierte Befestigungselement 340, 345 sind beispielsweise als Schrauben ausgebildet. Ebenfalls denkbar sind Bolzen, Stifte, die verklebt werden, etc., um die Fixierung der Abdeckung 330 zu verwirklichen.

Ferner weist die zweite Pendeleinheit 285 eine starre Verbindung der Drehachsen R (nicht gezeigt) der siebten und achten Rollen 265, 270 auf, wobei die starre Verbindung als ein U-förmiges Verbindungselement 300 ausgebildet ist. Die zweite Pendelachse 295 lagert dabei die starre Verbindung der Drehachsen der siebten und achten Rollen 265, 270 der vierten Rolleneinheit 275 schwenkbar. Die siebte und achte Rolle 265, 270 der vierten Rolleneinheit 275 sind über analog zu den weiteren Rollen ein erstes und zweites Befestigungselement 305, 310 mit dem U-förmigen Verbindungselement 300 verbunden. Dazu sind die siebte und achte Rolle 265, 270 auf Enden des U-förmigen Verbindungselements 300 der zweiten Pendeleinheit 285 aufgesetzt und bilden zusammen mit dem ersten und zweiten Befestigungselement 305, 310 und dem U-förmigen Verbindungselement 300 einen U-förmigen Körper 315 aus. Der U-förmige Körper 315 kann dabei als starrer Körper ausgebildet sein, und das erste und zweite Befestigungselement 305, 310 als Passschulterschrauben, als andere Schrauben, oder als eines der oben genannten, alternativen Befestigungsmittel für die Fixierung der Abdeckung 330.

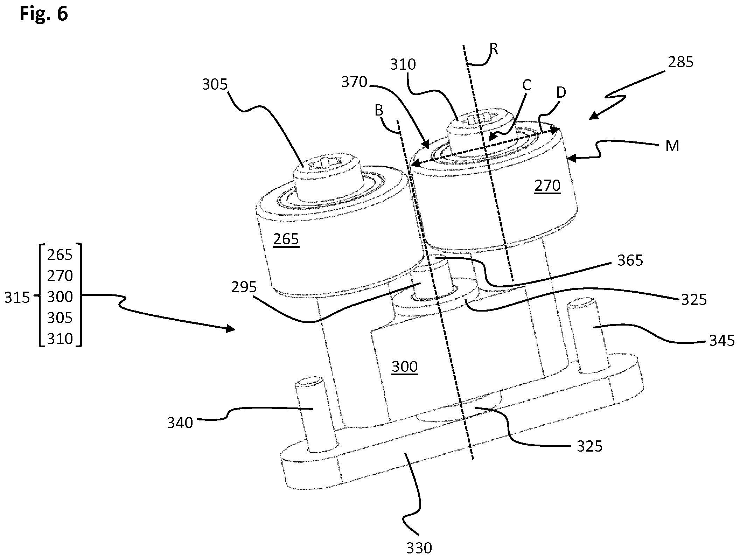

Weiterhin weist die zweite Pendeleinheit 285 Lagerelemente 325 auf, wobei die Lagerelemente 325 den U-förmigen Körper 315 schwenkbar um die zweite Pendelachse 295 lagern. Die Lagerelemente 325 sind in Figur 6 detaillierter abgebildet und können zum Schutz der zweiten Pendelachse 295 vorgesehen sein. Die Lagerelemente 325 können als Kugel- oder Gleitlager ausgebildet sein, alternativ dazu ist es möglich, den U-förmigen Körper 315 ohne Lagerelemente 325 um die zweite Pendelachse 295 zu schwenken. Der U-förmige Körper 315 kann in axialer Richtung gelagert sein, um möglichst stabil ausgebildet zu sein, das heißt, wenig Spiel zu haben.

Die siebte und achte Rolle 265, 270 können wie oben beschrieben weitere Lagerelemente 335 aufweisen, die zur Verringerung des Reibungswiderstands der siebten und achten Rolle 265, 270 bei der Bewegung entlang der vierten Lauffläche 130 vorgesehen sein können. Auch die weiteren Lagerelemente 335 können wie oben beschrieben, als Kugellager bzw. Gleitlager ausgebildet sein. Gleichermaßen können die erste bis sechste Rolle 210, 215, 225, 230, 250, 255 weitere Lagerelemente 335 aufweisen, die als Kugel- oder Gleitlager ausgebildet und in Figur 5 nicht dargestellt sind. Die Lagerelemente der ersten Pendeleinheit 245 sind in Figur 5 ebenfalls nicht dargestellt. Sie können analog zu den Lagerelementen 325 der zweiten Pendeleinheit 285 ausgebildet oder alternativ dazu, nicht an der ersten Pendeleinheit 245 vorgesehen sein.

Die zweite Trägereinrichtung 280 weist eine Ausnehmung 320 auf, in der passgenau die zweite Pendeleinheit 285 sitzt. Ist die zweite Pendeleinheit 285 in der Ausnehmung 320 angeordnet, so stehen die siebte und achte Rolle 265, 270 über die Ausnehmung 320 in der zweiten Trägereinrichtung 280 vor. Die Passgenauigkeit der Ausnehmung 320 und der zweiten Pendeleinheit 285 erlaubt eine platzsparende Ausgestaltung der Transportvorrichtung 200. Auch die erste Trägereinrichtung 240 kann eine derartige Ausnehmung aufweisen, in der die erste Pendeleinheit 245 sitzt. Diese ist in Figur 5 jedoch nicht gezeigt. In einer alternativen, nicht dargestellten Ausführungsform der Transportvorrichtung 200 können die erste und dritte Rolleneinheit 220, 260 ebenfalls jeweils eine Pendeleinheit aufweisen. Die erste Trägereinrichtung 240 und die zweite Trägereinrichtung 280 können dann weitere Ausnehmungen, ähnlich der Ausnehmung 320, umfassen.

Die beschriebenen Merkmale zur Ausgestaltung der zweiten Pendeleinheit 285 mit der Symmetrieachse B sowie die starre Verbindung der Drehachsen R der siebten und achten Rollen 265, 270 kann aufgrund der Symmetrie der Transportvorrichtung 200 und der gleichen Ausbildung der ersten und zweiten Rolleneinheit 220, 235 und der dritten und vierten Rolleneinheit 260, 275 gleichermaßen für die Ausgestaltung der ersten Pendeleinheit 245 und der starren Verbindung der Drehachsen R der dritten und vierten Rolle 225, 230 gelten. Auch die starre Verbindung der Drehachsen R der dritten und vierten Rollen 225, 230 kann als weiteres U-förmiges Verbindungselement ausgelegt sein, wobei das weitere U-förmige Verbindungselement um die erste Pendelachse 247 schwenkbar gelagert ist. Falls die erste Rolleneinheit 220 sowie die dritte Rolleneinheit 260 weitere Pendeleinheiten aufweisen, so können die Drehachsen R der ersten und zweiten Rollen 210, 215 bzw. die Drehachsen R der fünften und sechsten Rollen 250, 255 jeweils über weitere U-förmige Verbindungselemente starr verbunden werden.

Figur 6 zeigt eine vergrößerte perspektivische Darstellung der in Figur 5 dargestellten zweiten Pendeleinheit 285 und umfasst zusätzlich die Abdeckung 330 und das dritte und vierte Befestigungselement 340, 345 zur Verbindung der zweiten Pendelachse 295 der zweiten Pendeleinheit 285 mit der zweiten Trägereinrichtung 280. Die Lagerelemente 325 der zweiten Pendeleinheit 285 sind zwischen der Abdeckung 330 und dem U-förmigen Körper 315 und dem U-förmigen Körper 315 und dem in Figur 6 dargestellten freien Ende 365 der zweiten Pendelachse 295 angeordnet. Zur vereinfachten Darstellung ist die zweite Trägereinrichtung 280 in Figur 6 nicht dargestellt. Aus diesem Grund kann die zweite Pendelachse 295 ein freies Ende 365 aufweisen, das nicht, wie in Figur 5 gezeigt, in die zweite Trägereinrichtung 280 mündet.

Die zweite Pendeleinheit 285 ist symmetrisch aufgebaut und umfasst die Symmetrieachse B, auf der die zweite Pendelachse 295 liegt. Die siebte und achte Rolle 265, 270 grenzen aneinander an und sind mithilfe des ersten und zweiten Befestigungselements 305, 310 mit dem U-förmigen Verbindungselement 300 verbunden. Die siebte und achte Rolle 265, 270, das U-förmige Verbindungselement 300, sowie das erste und zweite Befestigungselement 305, 310, bilden den U-förmigen Körper 315 analog zu Figur 5. In Figur 6 ist der Rollen-Durchmesser D beispielhaft für die achte Rolle 270 dargestellt. Auch die siebte Rolle 265 kann mit dem gleichen Rollen-Durchmesser D ausgestaltet sein, ebenso wie die erste bis sechste Rolle 210, 215, 225, 230, 250, 255, wie oben bereits erläutert wurde.

Ferner zeigt Figur 6 exemplarisch die Drehachse R der achten Rolle 270. Die Drehachse der achten Rolle 270 verläuft durch einen Kreismittelpunkt C einer Kreisfläche 370 bei einer zylindrischen Ausbildung der achten Rolle 270. Die achte Rolle 270 liegt mit ihrer Mantelfläche M an der vierten Lauffläche (nicht dargestellt) an, und rollt über ihre Drehachse R entlang der vierten Lauffläche auf der geraden und gekrümmten Laufschiene 155, 105 ab. Gleichermaßen können die erste bis sechste Rolle 210, 215, 225, 230, 250, 255 (nicht dargestellt), sowie die siebte Rolle 265 eine solche Drehachse R aufweisen, welche durch den Kreismittelpunkt C der Kreisfläche 370 der ebenfalls zylindrisch ausgebildeten ersten bis sechsten Rolle 210, 215, 225, 230, 250, 255 sowie der siebten Rolle 265, verläuft. Die erste bis sechste Rolle 210, 215, 225, 230, 250, 255 sowie die siebte Rolle 265, können dann analog zur achten Rolle 270 mit ihrer Mantelfläche M an der ersten bis vierten Lauffläche 115, 120, 125, 130 anliegen und über ihre Drehachsen R entlang der ersten bis vierten Lauffläche 115, 120, 125, 130 abrollen. Es ist überdies denkbar, die erste bis achte Rolle 210, 215, 225, 230, 250, 255, 265, 270 in einer zu der in Figur 6 dargestellten abweichenden geometrischen Form auszubilden.

Die zweite Pendelachse 295 ist unterhalb der angrenzenden siebten und achten Rolle 265, 270 der vierten Rolleneinheit 285 angeordnet und wird zu beiden Seiten von dem U-förmigen Verbindungselement 300 umgeben und kann, wie bereits erläutert, statt dem freien Ende 365 in die zweite Trägereinrichtung 280 münden. Statt dem U-förmig ausgebildeten Verbindungselement 300 wie in den Figuren 5 und 6 dargestellt ist, sind weitere geometrische Formen denkbar, mithilfe der die Drehachsen R der zweiten und/oder vierten Rolleneinheiten 235, 275, die jeweils die erste und zweite Pendeleinheit 245, 285 aufweisen, starr verbunden werden. Bei Aufrechterhaltung der symmetrischen Ausgestaltung der ersten und/oder zweiten Pendeleinheit 245, 285 kann die erste und/oder zweite Pendelachse 247, 295 weiterhin auf der Symmetrieachse B der ersten und/oder zweiten Pendeleinheit 245, 285 liegen.

Alle vorstehend erläuterten Merkmale der zweiten Pendeleinheit 285 mit der zweiten Pendelachse 295 (sowie der vierten Rolleneinheit 275, die die siebte und achte Rolle 265, 270 umfasst), die im Zusammenhang mit den Figuren 4 bis 6 erläutert wurden, sind gleichermaßen auf die erste Pendeleinheit 245 mit der ersten Pendelachse 247 (sowie die erste Rolleneinheit 220, die die erste und zweite Rolle 210, 215 umfasst und/oder die zweite Rolleneinheit 235, die die dritte und vierte Rolle 225, 230 umfasst), übertragbar. Anhand von Figur 3 wurde der wesentliche Kern der Erfindung mithilfe der zweiten Rolleneinheit 235, die die dritte und vierte Rolle aufweist 225, 230 und darüber hinaus die erste Pendeleinheit 245 mit der ersten Pendelachse 247 aufweist, beschrieben, wobei in den nachfolgenden Figuren zur Erläuterung weiterer Merkmale der Pendeleinheit und der Pendelachse lediglich auf die zweite Pendeleinheit 285 mit der zweiten Pendelachse 295, sowie der vierten Rolleinheit 275 mit der siebten und achten Rolle 265, 270 Bezug genommen wurde. Die weiteren Merkmale der erfindungsgemäßen Pendeleinheit sind demnach nicht auf die zweite Pendeleinheit 285 mit der zweiten Pendelachse 295 beschränkt.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

### Bezugszeichenliste

- 100: Transportsystem
- 105: gekrümmte Laufschiene
- 110: erste Laufschienenseitenflanke
- 115: erste Lauffläche
- 120: zweite Lauffläche
- 125: dritte Lauffläche
- 130: vierte Lauffläche
- 135: zweite Laufschienenseitenflanke
- 140: Antriebsvorrichtung
- 145: Statorzähne
- 150: Magneten
- 155: gerade Laufschiene
- 160: bogenförmiges Motormodul
- 165: gerades Motormodul

- A: zweiter markierter Bereich
- B: Symmetrieachse (Pendeleinheit)
- C: Kreismittelpunkt
- D: Rollen-Durchmesser
- F: Symmetrieachse (Laufschiene)
- M: Mantelfläche
- R: Drehachse
- S: Schnittebene
- X: erster markierter Bereich
- α: spitzer Winkel

- 200: Transportvorrichtung
- 205: Mehrzahl an Rollen
- 210: erste Rolle
- 215: zweite Rolle
- 220: erste Rolleneinheit
- 225: dritte Rolle
- 230: vierte Rolle
- 235: zweite Rolleneinheit
- 240: erste Trägereinrichtung
- 245: erste Pendeleinheit
- 247: erste Pendelachse
- 250: fünfte Rolle
- 255: sechste Rolle
- 260: dritte Rolleneinheit
- 265: siebte Rolle
- 270: achte Rolle
- 275: vierte Rolleneinheit
- 280: zweite Trägereinrichtung
- 285: zweite Pendeleinheit
- 290: Koppelelement
- 295: zweite Pendelachse

- 300: U-förmiges Verbindungselement
- 305: erstes Befestigungselement
- 310: zweites Befestigungselement
- 315: U-förmiger Körper
- 320: Ausnehmung
- 325: Lagerelemente
- 330: Abdeckung
- 335: weitere Lagerelemente
- 340: drittes Befestigungselement
- 345: viertes Befestigungselement
- 350: Laufrichtung
- 355: fünftes Befestigungselement
- 360: sechstes Befestigungselement
- 365: freies Ende der zweiten Pendelachse
- 370: Kreisfläche
- 375: erste gestrichelte Linie
- 380: zweite gestrichelte Linie
- 385: dritte gestrichelte Linie

## Patentansprüche

1. Transportsystem (100) mit einer gekrümmten Laufschiene (105), die auf einer ersten Laufschienenseitenflanke (110) eine erste Lauffläche (115) und zweite Lauffläche (120) aufweist,
und mit zumindest einer Transportvorrichtung (200), welche in einer Laufrichtung (350) entlang der Laufschiene (105) geführt wird,
wobei die Transportvorrichtung (200) zur Führung eine Mehrzahl an Rollen (205) aufweist, die jeweils um eine eigene Drehachse (R) drehbar gelagert sind,
wobei eine erste Rolle (210) und eine zweite Rolle (215) der Transportvorrichtung (200) eine erste Rolleneinheit (220) zum Abrollen auf der ersten Lauffläche (115) bilden,
wobei eine dritte Rolle (225) der Transportvorrichtung (200) eine zweite Rolleneinheit (235) zum Abrollen auf der zweiten Lauffläche (120) bilden,
wobei die erste Rolleneinheit (220) und die zweite Rolleneinheit (235) über eine erste Trägereinrichtung (240) verbunden sind, die ausgebildet ist, die erste Rolleneinheit (220) gegen die erste Lauffläche (115) und die zweite Rolleneinheit (235) gegen die zweite Lauffläche (120) vorzuspannen,
wobei die erste Lauffläche (115) und die zweite Lauffläche (120) auf der ersten Laufschienenseitenflanke (110) unter einem Winkel (α) zu einer Symmetrieachse (F) der Laufschiene (105) angeordnet sind,
wobei die erste Lauffläche (115) und die zweite Lauffläche (120)voneinander beabstandet und einander zugewandt angeordnet und nach innen liegend orientiert sind,
wobei die erste Trägereinrichtung (240) so ausgebildet ist, dass die ersten und zweiten Rollen (210, 215) der ersten Rolleneinheit (220) und die dritte Rolle (225) der zweiten Rolleneinheit (235) ebenfalls nach innen liegend zueinander orientiert, und unter dem Winkel (α) zu der Symmetrieachse (F) der Laufschiene (105) auf der ersten und zweiten Lauffläche (115, 120) auf der ersten Laufschienenseitenflanke (110) angeordnet sind,
**dadurch gekennzeichnet, dass**
die zweite Rolleneinheit (235) der Transportvorrichtung (200) eine vierte Rolle (230) zum Abrollen auf der zweiten Lauffläche (120) aufweist, wobei die ersten und zweiten Rollen (210, 215) der ersten Rolleneinheit (220) und die vierte Rolle (225) der zweiten Rolleneinheit (235) ebenfalls nach innen liegend zueinander orientiert, und unter dem Winkel (α) zu der Symmetrieachse (F) der Laufschiene (105) auf der ersten und zweiten Lauffläche (115, 120) auf der ersten Laufschienenseitenflanke (110) angeordnet sind,
wobei die erste Rolleneinheit (220) oder die zweite Rolleneinheit (235) eine Pendeleinheit (245, 285) aufweist,
wobei die Pendeleinheit (245, 285) eine starre Verbindung der Drehachsen (R) der ersten und zweiten Rollen (210, 215) der ersten Rolleneinheit (220) oder eine starre Verbindung der Drehachsen (R) der dritten und vierten Rollen (225, 230) der zweiten Rolleneinheit (235) und eine Pendelachse (247, 295) aufweist,
wobei die starre Verbindung schwenkbar um die Pendelachse (247, 295) gelagert ist,
wobei die Pendelachse (247, 295) quer zu der Laufrichtung (350) der ersten und zweiten Rollen (210, 215) der ersten Rolleneinheit (220) oder der dritten und vierten Rollen (225, 230) der zweiten Rolleneinheit (235), die die Pendeleinheit (245, 285) aufweist, angeordnet ist,
wobei die ersten und zweiten Rollen (210, 215) der ersten Rolleneinheit (220) oder die dritten und vierten Rollen (225, 230) der zweiten Rolleneinheit (235), die die Pendeleinheit (245, 285) aufweist, aneinander angrenzen,
wobei die ersten und zweiten Rollen (210, 215) der ersten Rolleneinheit (220) oder die dritten und vierten Rollen (225, 230) der zweiten Rolleneinheit (235) andernfalls beabstandet angeordnet sind, und
wobei die beiden aneinander angrenzenden Rollen mittig zu dem Abstand der beiden beabstandeten Rollen angeordnet sind.

2. Transportsystem (100) nach Anspruch 1,
wobei die Laufschiene (105) entlang der Laufrichtung (350) eine zweite Laufschienenseitenflanke (135) aufweist,
wobei die Transportvorrichtung (200) eine dritte Rolleneinheit (260) und eine vierte Rolleneinheit (275) umfasst, die an der zweiten Laufschienenseitenflanke (135) abrollen, und wobei die dritte Rolleneinheit (260) und die vierte Rolleneinheit (275) über eine zweite Trägereinrichtung (280) verbunden sind.

3. Transportsystem (100) nach Anspruch 2,
wobei die Laufschiene (105) entlang der Laufrichtung (350) symmetrisch ausgebildet ist und die zweite Laufschienenseitenflanke (135) eine dritte Lauffläche (125) und eine vierte Lauffläche (130) umfasst,
wobei die Transportvorrichtung (200) symmetrisch zur Laufschiene (105) ausgebildet ist und die dritte Rolleneinheit (260) auf der dritten Lauffläche (125) und die vierte Rolleneinheit (275) auf der vierten Lauffläche (130) abrollen, wobei die dritte und vierte Rolleneinheit (260, 275) gleich zur ersten und zweiten Rolleneinheit (220, 235) ausgebildet sind, und
wobei die zweite Trägereinrichtung (280) gleich zur ersten Trägereinrichtung (240) ausgebildet ist.

4. Transportsystem (100) nach Anspruch 2 oder 3,
aufweisend ein Koppelelement (290), das bügelförmig ausgebildet ist,
wobei das Koppelelement (290) ausgelegt ist, die erste Trägereinrichtung (240) und die zweite Trägereinrichtung (280) miteinander zu verbinden.

5. Transportsystem (100) nach einem der Ansprüche 1 bis 4,
wobei die Pendeleinheit (245, 285) symmetrisch aufgebaut ist, und
wobei die Pendelachse (247, 295) auf einer Symmetrieachse (B) der Pendeleinheit (245, 285) liegt und fest mit der ersten Trägereinrichtung (240) der Transportvorrichtung (200) verbunden ist.

6. Transportsystem (100) nach einem der Ansprüche 1 bis 5, wobei die Pendeleinheit (245, 285) Lagerelemente (325) aufweist,
wobei die starre Verbindung der Pendeleinheit (245, 285) als ein U-förmiges Verbindungselement (300) ausgebildet ist, wobei die ersten und zweiten Rollen (210, 215) der ersten Rolleneinheit (220) oder die dritten und vierten Rollen (225, 230) der zweiten Rolleneinheit (235) auf Enden des U-förmigen Verbindungselements (300) der Pendeleinheit (245, 285) aufgesetzt und mit einem ersten Befestigungselement (305) und einem zweiten Befestigungselement (310) befestigt sind und die Anordnung einen U-förmigen Körper (315) ausbildet, und
wobei die Lagerelemente (325) den U-förmigen Körper (315) schwenkbar um die Pendelachse (247, 295) lagern.

7. Transportsystem (100) nach einem der Ansprüche 1 bis 6,
wobei die erste Trägereinrichtung (240) eine Ausnehmung (320) aufweist, in der passgenau die Pendeleinheit (245, 285) sitzt, und
wobei die ersten und zweiten Rollen (210, 215) der ersten Rolleneinheit (220) oder die dritten und vierten Rollen (225, 230) der zweiten Rolleneinheit (235) über die Ausnehmung (320) der ersten Trägereinrichtung (240) vorstehen, wenn die Pendeleinheit (245, 285) in der Ausnehmung (320) angeordnet ist.

8. Transportsystem (100) nach einem der Ansprüche 1 bis 7,
wobei die ersten und zweiten Rollen (210, 215) der ersten Rolleneinheit (220) und/oder die dritten und vierten Rollen (225, 230) der zweiten Rolleneinheit (235), mit den gleichen Rollen-Durchmessern (D) ausgebildet sind.

9. Transportsystem (100) nach einem der Ansprüche 1 bis 8, aufweisend eine Antriebsvorrichtung (140) mit einer Mehrzahl an Spulen und Magneten (150),
wobei die Antriebsvorrichtung (140) zum Antrieb der wenigstens einen Transportvorrichtung (200) ausgelegt ist,
wobei die Spulen einzeln bestrombar sind,
wobei die Magneten (150) an der wenigstens einen Transportvorrichtung (200) angeordnet sind,
wobei die Spulen ein magnetisches Feld für eine Wirkverbindung mit den Magneten (150), die an der wenigstens einen Transportvorrichtung (200) angeordnet sind, erzeugen, und
wobei die wenigstens eine Transportvorrichtung (200) durch die Wirkverbindung in Bewegung versetzt wird.

10. Transportvorrichtung (200) für die Verwendung in einem Transportsystem (100) mit einer gekrümmten Laufschiene (105), die auf einer ersten Laufschienenseitenflanke (110) eine erste Lauffläche (115) und zweite Lauffläche (120) aufweist,
wobei die Transportvorrichtung (200) zur Führung auf der Laufschiene (105) in eine Laufrichtung (350) eine Mehrzahl an Rollen (205) aufweist, die jeweils um eine eigene Drehachse (R) drehbar gelagert sind,
wobei eine erste Rolle (210) und eine zweite Rolle (215) der Transportvorrichtung (200) eine erste Rolleneinheit (220) zum Abrollen auf der ersten Lauffläche (115) bilden,
wobei eine dritte Rolle (225) der Transportvorrichtung (200) eine zweite Rolleneinheit (235) zum Abrollen auf der zweiten Lauffläche (120) bilden,
wobei die erste Rolleneinheit (220) und die zweite Rolleneinheit (235) über eine erste Trägereinrichtung (240) verbunden sind, die ausgebildet ist, die erste Rolleneinheit (220) gegen die erste Lauffläche (115) und die zweite Rolleneinheit (235) gegen die zweite Lauffläche (120) vorzuspannen,
wobei die erste Lauffläche (115) und die zweite Lauffläche (120) auf der ersten Laufschienenseitenflanke (110) unter einem Winkel (α) zu einer Symmetrieachse (F) der Laufschiene (105) angeordnet sind,
wobei die erste Lauffläche (115) und die zweite Lauffläche (120)voneinander beabstandet und einander zugewandt angeordnet und nach innen liegend orientiert sind,
wobei die erste Trägereinrichtung (240) so ausgebildet ist, dass die ersten und zweiten Rollen (210, 215) der ersten Rolleneinheit (220) und die dritte Rolle (225) der zweiten Rolleneinheit (235) ebenfalls nach innen liegend zueinander orientiert, und unter dem Winkel (α) zu der Symmetrieachse (F) der Laufschiene (105) auf der ersten und zweiten Lauffläche (115, 120) auf der ersten Laufschienenseitenflanke (110) angeordnet sind
**dadurch gekennzeichnet, dass**
die zweite Rolleneinheit (235) der Transportvorrichtung (200) eine vierte Rolle (230) zum Abrollen auf der zweiten Lauffläche (120) aufweist, wobei die ersten und zweiten Rollen (210, 215) der ersten Rolleneinheit (220) und
die vierte Rolle (225) der zweiten Rolleneinheit (235) ebenfalls nach innen liegend zueinander orientiert, und unter dem Winkel (α) zu der Symmetrieachse (F) der Laufschiene (105) auf der ersten und zweiten Lauffläche (115, 120) auf der ersten Laufschienenseitenflanke (110) angeordnet sind,
wobei die erste Rolleneinheit (220) oder die zweite Rolleneinheit (235) eine Pendeleinheit (245, 285) aufweist,
wobei die Pendeleinheit (245, 285) eine starre Verbindung der Drehachsen (R) der ersten und zweiten Rollen (210, 215) der ersten Rolleneinheit (220) oder eine starre Verbindung der Drehachsen (R) der dritten und vierten Rollen (225, 230) der zweiten Rolleneinheit (235) und eine Pendelachse (247, 295) aufweist,
wobei die starre Verbindung schwenkbar um die Pendelachse (247, 295) gelagert ist,
wobei die Pendelachse (247, 295) quer zu der Laufrichtung (350) der ersten und zweiten Rollen (210, 215) der ersten Rolleneinheit (220) oder der dritten und vierten Rollen (225, 230) der zweiten Rolleneinheit (235), die die Pendeleinheit (245, 285) aufweist, angeordnet ist,
wobei die ersten und zweiten Rollen (210, 215) der ersten Rolleneinheit (220) oder die dritten und vierten Rollen (225, 230) der zweiten Rolleneinheit (235), die die Pendeleinheit (245, 285) aufweist, aneinander angrenzen,
wobei die ersten und zweiten Rollen (210, 215) der ersten Rolleneinheit (220) oder die dritten und vierten Rollen (225, 230) der zweiten Rolleneinheit (235) andernfalls beabstandet angeordnet sind, und
wobei die beiden aneinander angrenzenden Rollen mittig zu dem Abstand der beiden beabstandeten Rollen angeordnet sind.

11. Transportvorrichtung (200) nach Anspruch 10,
wobei die Laufschiene (105) entlang der Laufrichtung (350) eine zweite Laufschienenseitenflanke (135) aufweist,
wobei die Transportvorrichtung (200) eine dritte Rolleneinheit (260) und eine vierte Rolleneinheit (275) umfasst, die an der zweiten Laufschienenseitenflanke (135) abrollen, und
wobei die dritte Rolleneinheit (260) und die vierte Rolleneinheit (275) über eine zweite Trägereinrichtung (280) verbunden sind.

12. Transportvorrichtung (200) nach Anspruch 10 oder 11,
wobei die Pendeleinheit (245, 285) symmetrisch aufgebaut ist, und
wobei die Pendelachse (247, 295) auf einer Symmetrieachse (B) der Pendeleinheit (245, 285) liegt und fest mit der ersten Trägereinrichtung (240) der Transportvorrichtung (200) verbunden ist.

13. Transportvorrichtung (200) nach einem der Ansprüche 10 bis 12,
wobei die Pendeleinheit (245, 285) Lagerelemente (325) aufweist,
wobei die starre Verbindung der Pendeleinheit (245, 285) als ein U-förmiges Verbindungselement (300) ausgebildet ist,
wobei die ersten und zweiten Rollen (210, 215) der ersten Rolleneinheit (220) oder die dritten und vierten Rollen (225, 230) der zweiten Rolleneinheit (235) auf Enden des U-förmigen Verbindungselements (300) der Pendeleinheit (245, 285) aufgesetzt und mit einem ersten Befestigungselement (305) und einem zweiten Befestigungselement (310) befestigt sind und die Anordnung einen U-förmigen Körper (315) ausbildet, und
wobei die Lagerelemente (325) den U-förmigen Körper (315) schwenkbar um die Pendelachse (247, 295) lagern.

14. Transportvorrichtung (200) nach einem der Ansprüche 10 bis 13,
wobei die ersten und zweiten Rollen (210, 215) der ersten Rolleneinheit (220) und/oder die dritten und vierten Rollen (225, 230) der zweiten Rolleneinheit (235), mit den gleichen Rollen-Durchmessern (D) ausgebildet sind.

## Claims

1. Transport system (100) having a curved running rail (105) which has a first running surface (115) and a second running surface (120) on a first running rail lateral flank (110),
and having at least one transport device (200) which is guided in a running direction (350) along the running rail (105),
wherein the transport device (200) for guiding has a plurality of rollers (205) which are in each case mounted so as to be rotatable about a dedicated rotation axis (R),
wherein a first roller (210) and a second roller (215) of the transport device (200) form a first roller unit (220) for rolling on the first running surface (115),
wherein a third roller (225) of the transport device (200) forms a second roller unit (235) for rolling on the second running surface (120),
wherein the first roller unit (220) and the second roller unit (235) are connected by way of a first carrier device (240), which is designed to preload the first roller unit (220) in relation to the first running surface (115), and preload the second roller unit (235) in relation to the second running surface (120),
wherein the first running surface (115) and the second running surface (120) are disposed on the first running rail lateral flank (110) at an angle (α) to an axis of symmetry (F) of the running rail (105),
wherein the first running surface (115) and the second running surface (120) are mutually spaced apart and disposed so as to face one another and be oriented inwards,
wherein the first carrier device (240) is designed such that the first and second rollers (210, 215) of the first roller unit (220) and the third roller (225) of the second roller unit (235) are likewise disposed so as to be mutually oriented inwards, and are disposed on the first and second running surfaces (115, 120) on the first running rail lateral flank (110) at the angle (α) to the axis of symmetry (F) of the running rail (105),
**characterized in that**
the second roller unit (235) of the transport device (200) has a fourth roller (230) for rolling on the second running surface (120), wherein the first and second rollers (210, 215) of the first roller unit (220) and the fourth roller (225) of the second roller unit (235) are likewise disposed so as to be mutually oriented inwards, and are disposed on the first and second running surfaces (115, 120) on the first running rail lateral flank (110) at the angle (α) to the axis of symmetry (F) of the running rail (105),
wherein the first roller unit (220) or the second roller unit (235) has a swing unit (245, 285),
wherein the swing unit (245, 285) has a rigid connection of the rotation axes (R) of the first and second rollers (210, 215) of the first roller unit (220) or a rigid connection of the rotation axes (R) of the third and fourth rollers (225, 230) of the second roller unit (235), and a swing axle (247, 295),
wherein the rigid connection is mounted so as to be pivotable about the swing axle (247, 295),
wherein the swing axle (247, 295) is disposed transversely to the direction of travel (350) of the first and second rollers (210, 215) of the first roller unit (220) or the third and fourth rollers (225, 230) of the second roller unit (235) comprising the swing unit (245, 285),
wherein the first and second rollers (210, 215) of the first roller unit (220) or the third and fourth rollers (225, 230) of the second roller unit (235) comprising the swing unit (245, 285) are mutually adjacent,
wherein alternatively the first and second rollers (210, 215) of the first roller unit (220) or the third and fourth rollers (225, 230) of the second roller unit (235) are disposed so as to be spaced apart, and
wherein the two mutually adjacent rollers are disposed centrically in terms of the spacing of the two spaced-apart rollers.

2. Transport system (100) according to Claim 1,
wherein the running rail (105) has a second running rail lateral flank (135) along the running direction (350),
wherein the transport device (200) comprises a third roller unit (260) and a fourth roller unit (275) which roll on the second running rail lateral flank (135), and wherein the third roller unit (260) and the fourth roller unit (275) are connected by way of a second carrier device (280).

3. Transport system (100) according to Claim 2,
wherein the running rail (105) is formed symmetrically along the running direction (350), and the second running rail lateral flank (135) comprises a third running surface (125) and a fourth running surface (130),
wherein the transport device (200) is formed symmetrically to the running rail (105), and the third roller unit (260) rolls on the third running surface (125) and the fourth roller unit (275) rolls on the fourth running surface (130), wherein the third and fourth roller unit (260, 275) are designed identically to the first and second roller unit (220, 235), and
wherein the second carrier device (280) is designed identically to the first carrier device (240).

4. Transport system (100) according to Claim 2 or 3,
having a coupling element (290), which is formed in the shape of a bracket,
wherein the coupling element (290) is designed to connect the first carrier device (240) and the second carrier device (280) to one another.

5. Transport system (100) according to one of Claims 1 to 4,
wherein the swing unit (245, 285) is symmetrically constructed, and
wherein the swing axle (247, 295) lies on a symmetry axis (B) of the swing unit (245, 285) and is fixedly connected to the first carrier device (240) of the transport device (200).

6. Transport system (100) according to one of Claims 1 to 5, wherein the swing unit (245, 285) has bearing elements (325),
wherein the rigid connection of the swing unit (245, 285) is formed as a U-shaped connecting element (300), wherein the first and second rollers (210, 215) of the first roller unit (220) or the third and fourth rollers (225, 230) of the second roller unit (235) are attached to ends of the U-shaped connecting element (300) of the swing unit (245, 285) and fastened with a first fastening element (305) and a second fastening element (310), the assembly forming a U-shaped body (315), and
wherein the bearing elements (325) mount the U-shaped body (315) so as to be pivotable about the swing axle (247, 295).

7. Transport system (100) according to one of Claims 1 to 6,
wherein the first carrier device (240) has a recess (320) in which the swing unit (245, 285) sits in a precise fit, and
wherein the first and second rollers (210, 215) of the first roller unit (220) or the third and fourth rollers (225, 230) of the second roller unit (235) project beyond the recess (320) of the first carrier device (240) when the swing unit (245, 285) is disposed in the recess (320).

8. Transport system (100) according to one of Claims 1 to 7,
wherein the first and second rollers (210, 215) of the first roller unit (220) and/or the third and fourth rollers (225, 230) of the second roller unit (235) are designed having identical roller diameters (D).

9. Transport system (100) according to one of Claims 1 to 8,
having a drive device (140) having a plurality of coils and magnets (150),
wherein the drive device (140) is conceived for driving the at least one transport device (200),
whereby the coils can be energized individually,
wherein the magnets (150) are disposed on the at least one transport device (200),
wherein the coils generate a magnetic field for an operative connection to the magnets (150) disposed on the at least one transport device (200), and
wherein the at least one transport device (200) is set in motion by the operative connection.

10. Transport device (200) for use in a transport system (100) having a curved running rail (105) which has a first running surface (115) and a second running surface (120) on a first running rail lateral flank (110),
wherein the transport device (200) for guiding on the running rail (105) in a running direction (350) has a plurality of rollers (205) which are in each case mounted so as to be rotatable about a dedicated rotation axis (R),
wherein a first roller (210) and a second roller (215) of the transport device (200) form a first roller unit (220) for rolling on the first running surface (115),
wherein a third roller (225) of the transport device (200) forms a second roller unit (235) for rolling on the second running surface (120),
wherein the first roller unit (220) and the second roller unit (235) are connected by way of a first carrier device (240), which is designed to preload the first roller unit (220) in relation to the first running surface (115), and preload the second roller unit (235) in relation to the second running surface (120),
wherein the first running surface (115) and the second running surface (120) are disposed on the first running rail lateral flank (110) at an angle (α) to an axis of symmetry (F) of the running rail (105),
wherein the first running surface (115) and the second running surface (120) are mutually spaced apart and disposed so as to face one another and be oriented inwards,
wherein the first carrier device (240) is designed such that the first and second rollers (210, 215) of the first roller unit (220) and the third roller (225) of the second roller unit (235) are likewise disposed so as to be mutually oriented inwards, and are disposed on the first and second running surfaces (115, 120) on the first running rail lateral flank (110) at the angle (α) to the axis of symmetry (F) of the running rail (105),
**characterized in that**
the second roller unit (235) of the transport device (200) has a fourth roller (230) for rolling on the second running surface (120), wherein the first and second rollers (210, 215) of the first roller unit (220) and the fourth roller (225) of the second roller unit (235) are likewise disposed so as to be mutually oriented inwards, and are disposed on the first and second running surfaces (115, 120) on the first running rail lateral flank (110) at the angle (α) to the axis of symmetry (F) of the running rail (105),
wherein the first roller unit (220) or the second roller unit (235) has a swing unit (245, 285),
wherein the swing unit (245, 285) has a rigid connection of the rotation axes (R) of the first and second rollers (210, 215) of the first roller unit (220) or a rigid connection of the rotation axes (R) of the third and fourth rollers (225, 230) of the second roller unit (235) and a swing axle (247, 295),
wherein the rigid connection is mounted so as to be pivotable about the swing axle (247, 295),
wherein the swing axle (247, 295) is disposed transversely to the running direction (350) of the first and second rollers (210, 215) of the first roller unit (220) or the third and fourth rollers (225, 230) of the second roller unit (235) comprising the swing unit (245, 285),
wherein the first and second rollers (210, 215) of the first roller unit (220) or the third and fourth rollers (225, 230) of the second roller unit (235) comprising the swing unit (245, 285) are mutually adjacent,
wherein alternatively the first and second rollers (210, 215) of the first roller unit (220) or the third and fourth rollers (225, 230) of the second roller unit (235) are disposed so as to be spaced apart, and
wherein the two mutually adjacent rollers are disposed centrically in terms of the spacing of the two spaced-apart rollers.

11. Transport device (200) according to Claim 10,
wherein the running rail (105) has a second running rail lateral flank (135) along the running direction (350),
wherein the transport device (200) comprises a third roller unit (260) and a fourth roller unit (275) which roll on the second running rail lateral flank (135), and wherein the third roller unit (260) and the fourth roller unit (275) are connected by way of a second carrier device (280).

12. Transport device (200) according to Claim 10 or 11,
wherein the swing unit (245, 285) is symmetrically constructed, and
wherein the swing axle (247, 295) lies on a symmetry axis (B) of the swing unit (245, 285) and is fixedly connected to the first carrier device (240) of the transport device (200).

13. Transport device (200) according to one of Claims 10 to 12,
wherein the swing unit (245, 285) has bearing elements (325),
wherein the rigid connection of the swing unit (245, 285) is formed as a U-shaped connecting element (300),
wherein the first and second rollers (210, 215) of the first roller unit (220) or the third and fourth rollers (225, 230) of the second roller unit (235) are attached to ends of the U-shaped connecting element (300) of the swing unit (245, 285) and fastened with a first fastening element (305) and a second fastening element (310), the assembly forming a U-shaped body (315), and
wherein the bearing elements (325) mount the U-shaped body (315) so as to be pivotable about the swing axle (247, 295).

14. Transport device (200) according to one of Claims 10 to 13,
wherein the first and second rollers (210, 215) of the first roller unit (220) and/or the third and fourth rollers (225, 230) of the second roller unit (235) are designed having identical roller diameters (D).

## Revendications

1. Système de transport (100) doté d'un rail de roulement (105) incurvé, qui comprend, sur un premier flanc latéral (110) du rail de roulement, une première surface de roulement (115) et une deuxième surface de roulement (120),
et doté d'au moins un dispositif de transport (200) qui est guidé dans une direction de roulement (350) le long du rail de roulement (105),
le dispositif de transport (200) comprenant, pour le guidage, une pluralité de rouleaux (205) qui sont montés à rotation respectivement autour d'un axe de rotation (R) propre,
un premier rouleau (210) et un deuxième rouleau (215) du dispositif de transport (200) formant une première unité de rouleaux (220) destinée à rouler sur la première surface de roulement (115),
un troisième rouleau (225) du dispositif de transport (200) formant une deuxième unité de rouleaux (235) destinée à rouler sur la deuxième surface de roulement (120),
la première unité de rouleaux (220) et la deuxième unité de rouleaux (235) étant reliées par l'intermédiaire d'un premier moyen de support (240), qui est conçu pour précontraindre la première unité de rouleaux (220) contre la première surface de roulement (115) et la deuxième unité de rouleaux (235) contre la deuxième surface de roulement (120),
la première surface de roulement (115) et la deuxième surface de roulement (120) étant disposées sur le premier flanc latéral (110) du rail de roulement selon un angle (α) par rapport à un axe de symétrie (F) du rail de roulement (105),
la première surface de roulement (115) et la deuxième surface de roulement (120) étant disposées à distance l'une de l'autre et se faisant face, et étant orientées vers l'intérieur,
le premier moyen de support (240) étant conçu de telle sorte que les premier et deuxième rouleaux (210, 215) de la première unité de rouleaux (220) et le troisième rouleau (225) de la deuxième unité de rouleaux (235) soient également orientés vers l'intérieur l'un par rapport à l'autre, et soient disposés selon l'angle (α) par rapport à l'axe de symétrie (F) du rail de roulement (105) sur les première et deuxième surfaces de roulement (115, 120) sur le premier flanc latéral de rail de roulement (110),
caractérisé en ce
la deuxième unité de rouleaux (235) du dispositif de transport (200) comprend un quatrième rouleau (230) destiné à rouler sur la deuxième surface de roulement (120), les premier et deuxième rouleaux (210, 215) de la première unité de rouleaux (220) et le quatrième rouleau (225) de la deuxième unité de rouleaux (235) étant également orientés vers l'intérieur l'un par rapport à l'autre, et étant disposés selon l'angle (α) par rapport à l'axe de symétrie (F) du rail de roulement (105) sur les première et deuxième surfaces de roulement (115, 120) sur le premier flanc latéral de rail de roulement (110), la première unité de rouleaux (220) ou la deuxième unité de rouleaux (235) comprenant une unité de pendule (245, 285),
l'unité de pendule (245, 285) comprenant une liaison rigide des axes de rotation (R) des premier et deuxième rouleaux (210, 215) de la première unité de rouleaux (220) ou une liaison rigide des axes de rotation (R) des troisième et quatrième rouleaux (225, 230) de la deuxième unité de rouleaux (235) et un axe de pendule (247, 295), la liaison rigide étant montée pivotante autour de l'axe de pendule (247, 295),
l'axe de pendule (247, 295) étant disposé transversalement à la direction de roulement (350) des premier et deuxième rouleaux (210, 215) de la première unité de rouleaux (220) ou des troisième et quatrième rouleaux (225, 230) de la deuxième unité de rouleaux (235) qui comprend l'unité de pendule (245, 285),
les premier et deuxième rouleaux (210, 215) de la première unité de rouleaux (220) ou les troisième et quatrième rouleaux (225, 230) de la deuxième unité de rouleaux (235), qui comprend l'unité de pendule (245, 285), étant adjacents les uns aux autres,
les premier et deuxième rouleaux (210, 215) de la première unité de rouleaux (220) ou les troisième et quatrième rouleaux (225, 230) de la deuxième unité de rouleaux (235) étant par ailleurs disposés de manière espacée, et
les deux rouleaux adjacents l'un à l'autre étant disposés de manière centrale par rapport à l'espacement des deux rouleaux espacés.

2. Système de transport (100) selon la revendication 1,
dans lequel le rail de roulement (105) comprend un deuxième flanc latéral de rail de roulement (135) le long de la direction de roulement (350),
le dispositif de transport (200) comprenant une troisième unité de rouleaux (260) et une quatrième unité de rouleaux (275) qui roulent sur le deuxième flanc latéral de rail de roulement (135), et la troisième unité de rouleaux (260) et la quatrième unité de rouleaux (275) étant reliées par un deuxième moyen de support (280).

3. Système de transport (100) selon la revendication 2,
dans lequel le rail de roulement (105) est réalisé de manière symétrique le long de la direction de roulement (350) et le deuxième flanc latéral de rail de roulement (135) comprend une troisième surface de roulement (125) et une quatrième surface de roulement (130),
le dispositif de transport (200) étant réalisé de manière symétrique par rapport au rail de roulement (105) et la troisième unité de rouleaux (260) roulant sur la troisième surface de roulement (125) et la quatrième unité de rouleaux (275) roulant sur la quatrième surface de roulement (130), les troisième et quatrième unités de rouleaux (260, 275) étant réalisées de manière identique aux première et deuxième unités de rouleaux (220, 235), et
le deuxième moyen de support (280) étant réalisé de manière identique au premier moyen de support (240).

4. Système de transport (100) selon la revendication 2 ou 3,
comprenant un élément d'accouplement (290) qui est réalisé en forme d'étrier,
l'élément d'accouplement (290) étant conçu pour relier l'un à l'autre le premier moyen de support (240) et le deuxième moyen de support (280).

5. Système de transport (100) selon l'une quelconque des revendications 1 à 4,
dans lequel l'unité de pendule (245, 285) est de structure symétrique, et
l'axe de pendule (247, 295) étant situé sur un axe de symétrie (B) de l'unité de pendule (245, 285) et étant relié de manière fixe au premier moyen de support (240) du dispositif de transport (200).

6. Système de transport (100) selon l'une quelconque des revendications 1 à 5, dans lequel l'unité de pendule (245, 285) comprend des éléments de palier (325),
la liaison rigide de l'unité de pendule (245, 285) étant réalisée sous la forme d'un élément de liaison en forme de U (300), les premier et deuxième rouleaux (210, 215) de la première unité de rouleaux (220) ou les troisième et quatrième rouleaux (225, 230) de la deuxième unité de rouleaux (235) étant placés sur des extrémités de l'élément de liaison en forme de U (300) de l'unité de pendule (245, 285) et étant fixés par un premier élément de fixation (305) et un deuxième élément de fixation (310), l'agencement formant un corps en forme de U (315), et
les éléments de palier (325) supportant le corps en forme de U (315) de manière pivotante autour de l'axe de pendule (247, 295).

7. Système de transport (100) selon l'une quelconque des revendications 1 à 6,
dans lequel le premier moyen de support (240) présente un évidement (320) dans lequel l'unité de pendule (245, 285) est logée de manière ajustée, et
les premier et deuxième rouleaux (210, 215) de la première unité de rouleaux (220) ou les troisième et quatrième rouleaux (225, 230) de la deuxième unité de rouleaux (235) dépassant de l'évidement (320) du premier moyen de support (240) lorsque l'unité de pendule (245, 285) est disposée dans l'évidement (320).

8. Système de transport (100) selon l'une quelconque des revendications 1 à 7,
dans lequel les premiers et deuxième rouleaux (210, 215) de la première unité de rouleaux (220) et/ou les troisième et quatrième rouleaux (225, 230) de la deuxième unité de rouleaux (235), sont réalisés avec les mêmes diamètres de rouleaux (D).

9. Système de transport (100) selon l'une quelconque des revendications 1 à 8,
comprenant un dispositif d'entraînement (140) doté d'une pluralité de bobines et d'aimants (150),
le dispositif d'entraînement (140) étant conçu pour entraîner ledit au moins un dispositif de transport (200),
les bobines pouvant être alimentées en courant individuellement,
les aimants (150) étant disposés sur ledit au moins un dispositif de transport (200),
les bobines générant un champ magnétique permettant une liaison active avec les aimants (150) qui sont disposés sur ledit au moins un dispositif de transport (200), et ledit au moins un dispositif de transport (200) étant mis en mouvement par la liaison active.

10. Dispositif de transport (200) destiné à être utilisé dans un système de transport (100) doté d'un rail de roulement (105) incurvé, qui comprend, sur un premier flanc latéral (110) du rail de roulement, une première surface de roulement (115) et une deuxième surface de roulement (120),
le dispositif de transport (200) comprenant, pour le guidage sur le rail de roulement (105) dans une direction de roulement (350), une pluralité de rouleaux (205) qui sont montés à rotation respectivement autour d'un axe de rotation (R) propre,
un premier rouleau (210) et un deuxième rouleau (215) du dispositif de transport (200) formant une première unité de rouleaux (220) destinée à rouler sur la première surface de roulement (115),
un troisième rouleau (225) du dispositif de transport (200) formant une deuxième unité de rouleaux (235) destinée à rouler sur la deuxième surface de roulement (120),
la première unité de rouleaux (220) et la deuxième unité de rouleaux (235) étant reliées par l'intermédiaire d'un premier moyen de support (240), qui est conçu pour précontraindre la première unité de rouleaux (220) contre la première surface de roulement (115) et la deuxième unité de rouleaux (235) contre la deuxième surface de roulement (120),
la première surface de roulement (115) et la deuxième surface de roulement (120) étant disposées sur le premier flanc latéral (110) du rail de roulement selon un angle (α) par rapport à un axe de symétrie (F) du rail de roulement (105),
la première surface de roulement (115) et la deuxième surface de roulement (120) étant disposées à distance l'une de l'autre et se faisant face, et étant orientées vers l'intérieur,
le premier moyen de support (240) étant conçu de telle sorte que les premier et deuxième rouleaux (210, 215) de la première unité de rouleaux (220) et le troisième rouleau (225) de la deuxième unité de rouleaux (235) soient également orientés vers l'intérieur l'un par rapport à l'autre, et soient disposés selon l'angle (α) par rapport à l'axe de symétrie (F) du rail de roulement (105) sur les première et deuxième surfaces de roulement (115, 120) sur le premier flanc latéral de rail de roulement (110)
caractérisé en ce
la deuxième unité de rouleaux (235) du dispositif de transport (200) comprend un quatrième rouleau (230) destiné à rouler sur la deuxième surface de roulement (120), les premier et deuxième rouleaux (210, 215) de la première unité de rouleaux (220) et le quatrième rouleau (225) de la deuxième unité de rouleaux (235) étant également orientés vers l'intérieur l'un par rapport à l'autre, et étant disposés selon l'angle (α) par rapport à l'axe de symétrie (F) du rail de roulement (105) sur les première et deuxième surfaces de roulement (115, 120) sur le premier flanc latéral de rail de roulement (110), la première unité de rouleaux (220) ou la deuxième unité de rouleaux (235) comprenant une unité de pendule (245, 285),
l'unité de pendule (245, 285) comprenant une liaison rigide des axes de rotation (R) des premier et deuxième rouleaux (210, 215) de la première unité de rouleaux (220) ou une liaison rigide des axes de rotation (R) des troisième et quatrième rouleaux (225, 230) de la deuxième unité de rouleaux (235) et un axe de pendule (247, 295), la liaison rigide étant montée pivotante autour de l'axe de pendule (247, 295),
l'axe de pendule (247, 295) étant disposé transversalement à la direction de roulement (350) des premier et deuxième rouleaux (210, 215) de la première unité de rouleaux (220) ou des troisième et quatrième rouleaux (225, 230) de la deuxième unité de rouleaux (235) qui comprend l'unité de pendule (245, 285),
les premier et deuxième rouleaux (210, 215) de la première unité de rouleaux (220) ou les troisième et quatrième rouleaux (225, 230) de la deuxième unité de rouleaux (235), qui comprend l'unité de pendule (245, 285), étant adjacents les uns aux autres,
les premier et deuxième rouleaux (210, 215) de la première unité de rouleaux (220) ou les troisième et quatrième rouleaux (225, 230) de la deuxième unité de rouleaux (235) étant par ailleurs disposés de manière espacée, et
les deux rouleaux adjacents l'un à l'autre étant disposés de manière centrale par rapport à l'espacement des deux rouleaux espacés.

11. Dispositif de transport (200) selon la revendication 10,
dans lequel le rail de roulement (105) comprend un deuxième flanc latéral de rail de roulement (135) le long de la direction de roulement (350),
le dispositif de transport (200) comprenant une troisième unité de rouleaux (260) et une quatrième unité de rouleaux (275) qui roulent sur le deuxième flanc latéral de rail de roulement (135), et
la troisième unité de rouleaux (260) et la quatrième unité de rouleaux (275) étant reliées par un deuxième moyen de support (280).

12. Dispositif de transport (200) selon la revendication 10 ou 11,
dans lequel l'unité de pendule (245, 285) est de structure symétrique, et
l'axe de pendule (247, 295) étant situé sur un axe de symétrie (B) de l'unité de pendule (245, 285) et étant relié de manière fixe au premier moyen de support (240) du dispositif de transport (200).

13. Dispositif de transport (200) selon l'une quelconque des revendications 10 à 12,
dans lequel l'unité de pendule (245, 285) comprend des éléments de palier (325),
la liaison rigide de l'unité de pendule (245, 285) étant réalisée sous la forme d'un élément de liaison en forme de U (300),
les premier et deuxième rouleaux (210, 215) de la première unité de rouleaux (220) ou les troisième et quatrième rouleaux (225, 230) de la deuxième unité de rouleaux (235) étant placés sur des extrémités de l'élément de liaison en forme de U (300) de l'unité de pendule (245, 285) et étant fixés par un premier élément de fixation (305) et un deuxième élément de fixation (310), l'agencement formant un corps en forme de U (315), et
les éléments de palier (325) supportant le corps en forme de U (315) de manière pivotante autour de l'axe de pendule (247, 295).

14. Dispositif de transport (200) selon l'une quelconque des revendications 10 à 13,
dans lequel les premiers et deuxième rouleaux (210, 215) de la première unité de rouleaux (220) et/ou les troisième et quatrième rouleaux (225, 230) de la deuxième unité de rouleaux (235), sont réalisés avec les mêmes diamètres de rouleaux (D).
